# EUROPEAN PATENT APPLICATION

(11) **EP 4 712 661 A1**
(43) Date of publication of application: **18.03.2026**
(21) Application number: 24802753.4
(22) Date of filing: 23.04.2024
(51) Int. Cl.: H04W 72/50

(54) **SENSING METHOD AND DEVICE**

(30) Priority: 08.05.2023 CN 202310512926
(71) Applicant: Datang Mobile Communications Equipment Co., Ltd., Beijing 100085 (CN)
(72) Inventor: WANG, Junwei, Beijing 100085 (CN)
(74) Representative: Ipsilon
(86) International application number: PCT/CN2024/089262
(87) International publication number: WO 2024/230468

(57) **Abstract**

Embodiments of the present disclosure relate to the technical fields of communications and sensing, and provide a sensing method and device. The method comprises: determining a wireless sensing resource for a sensing service, wherein the wireless sensing resource is associated with the state of a sensing process and/or a sensing service KPI; and receiving or sending a sensing signal or channel on the basis of the wireless sensing resource.

## Description

### CROSS-REFERENCE TO RELATED APPLICATION

The present application claims priority to Chinese Patent Application No. 202310512926.8, filed on May 08, 2023, entitled "Sensing Method and Device", which is hereby incorporated by reference in its entirety.

### FIELD

The present application relates to the field of communications and sensing, in particular to sensing methods and apparatuses.

### BACKGROUND

In case that a terminal or base station performs a sensing procedure, a wireless sensing resource needs to be allocated in order to reduce interference to other communication/sensing nodes. In case that a sensing server initiates a sensing service, how to more effectively allocate the wireless resource based on requirements of the sensing service is a problem to be solved. However, there is no description of relevant technical solution in the related art.

### SUMMARY

Embodiments of the present application provide sensing methods and apparatuses, which decompose a sensing service requirement into multiple states. Different states correspond to different resource allocation strategies, which may meet the service requirement while saving air interface resources.

According to an embodiment of the present application, a sensing method performed by a terminal is provided. The method includes:
determining a wireless sensing resource for a sensing service, where the wireless sensing resource is associated with a state of a sensing procedure and/or a sensing service key performance indicator (KPI); and
sending or receiving a sensing signal or channel based on the wireless sensing resource.

According to the sensing method provided by an embodiment of the present application, determining the wireless sensing resource for the sensing service includes any of following:
determining the wireless sensing resource based on the state of the sensing procedure and/or the sensing service KPI; or
receiving resource indication information sent from a base station or a sensing server, and determining the wireless sensing resource based on the resource indication information, where the resource indication information is generated based on the state of the sensing procedure and/or the sensing service KPI.

According to the sensing method provided by an embodiment of the present application, the method further includes:
determining the state of the sensing procedure and/or the sensing service KPI.

According to the sensing method provided by an embodiment of the present application, determining the state of the sensing procedure and/or the sensing service KPI includes:
determining the state of the sensing procedure and/or the sensing service KPI based on state management information; or
receiving state update information of the sensing procedure sent from a sensing server or a base station, and determining an updated state of the sensing procedure and/or an updated sensing service KPI based on the state update information of the sensing procedure; or
updating the state of the sensing procedure and/or the sensing service KPI based on a historical sensing result or data in the sensing procedure.

According to the sensing method provided by an embodiment of the present application, the method further includes:
triggering the sensing service and determining state management information; or
receiving state management information sent from a sensing server or a base station.

According to the sensing method provided by an embodiment of the present application, the method further includes:
sending the state management information to the sensing server or the base station.

According to the sensing method provided by an embodiment of the present application, the method further includes:
sending the state update information of the sensing procedure to the sensing server or the base station, where the state update information of the sensing procedure is used to indicate the updated state of the sensing procedure and/or the updated sensing service KPI.

According to the sensing method provided by an embodiment of the present application, the state of the sensing procedure includes one or more of following:
a first state, a second state, a third state, or a fourth state;
the state of the sensing procedure meets one or more of following:
   a KPI of a sensing service in the first state is lower than a given KPI threshold of the sensing service;
   a KPI of a sensing service in the fourth state is lower than a given KPI threshold of the sensing service;
   a KPI of a sensing service in the first state is lower than a KPI of a sensing service in the second state;
   a KPI of a sensing service in the first state is lower than a KPI of a sensing service in the third state;
   a KPI of a sensing service in the fourth state is lower than a KPI of a sensing service in the second state;
   a KPI of a sensing service in the fourth state is lower than a KPI of a sensing service in the third state;
   a KPI of a sensing service in the second state is higher than or equal to a given KPI threshold of the sensing service; or
   a KPI of a sensing service in the third state is higher than or equal to a given KPI threshold of the sensing service.

According to the sensing method provided by an embodiment of the present application, the state management information includes one or more of following:
one or more states included in the sensing procedure;
an initial state of the sensing procedure;
a KPI of the sensing procedure;
a service type identifier of the sensing service;
an identifier of a node that manages the state of the sensing procedure;
an identifier of a node that allocates the wireless sensing resource for the sensing service.

According to an embodiment of the present application, a sensing method performed by a base station is provided. The method includes:
determining a wireless sensing resource for a sensing service, where the wireless sensing resource is associated with a state of a sensing procedure and/or a sensing service key performance indicator (KPI); and
sending or receiving a sensing signal or channel based on the wireless sensing resource.

According to the sensing method provided by an embodiment of the present application, determining the wireless sensing resource for the sensing service includes any of following:
determining the wireless sensing resource based on the state of the sensing procedure and/or the sensing service KPI; or
receiving resource indication information sent from a sensing server, and determining the wireless sensing resource for the sensing service based on the resource indication information, where the resource indication information is generated based on the state of the sensing procedure and/or the sensing service KPI.

According to the sensing method provided by an embodiment of the present application, the method further includes:
sending the resource indication information to a terminal, where the resource indication information is used to indicate the wireless sensing resource.

According to the sensing method provided by an embodiment of the present application, the method further includes:
determining the state of the sensing procedure and/or the sensing service KPI.

According to the sensing method provided by an embodiment of the present application, determining the state of the sensing procedure and/or the sensing service KPI includes:
determining the state of the sensing procedure and/or the sensing service KPI based on state management information; or
receiving state update information of the sensing procedure sent from a sensing server or a terminal, and determining an updated state of the sensing procedure and/or an updated sensing service KPI based on the state update information of the sensing procedure, where the state update information of the sensing procedure is generated based on an obtained sensing result; or
updating the state of the sensing procedure and/or the sensing service KPI based on a historical sensing result or data in the sensing procedure.

According to the sensing method provided by an embodiment of the present application, the method further includes:
triggering the sensing service and determining state management information; or
receiving state management information sent from a sensing server or a terminal.

According to the sensing method provided by an embodiment of the present application, the method further includes:
sending the state management information to the sensing server or the terminal.

According to the sensing method provided by an embodiment of the present application, the method further includes:
sending the state update information of the sensing procedure to the sensing server or the terminal, where the state update information of the sensing procedure is used to indicate the updated state of the sensing procedure and/or the updated sensing service KPI.

According to the sensing method provided by an embodiment of the present application, the state of the sensing procedure includes one or more of following:
a first state, a second state, a third state, or a fourth state;
the state of the sensing procedure meets one or more of following:
   a KPI of a sensing service in the first state is lower than a given KPI threshold of the sensing service;
   a KPI of a sensing service in the fourth state is lower than a given KPI threshold of the sensing service;
   a KPI of a sensing service in the first state is lower than a KPI of a sensing service in the second state;
   a KPI of a sensing service in the first state is lower than a KPI of a sensing service in the third state;
   a KPI of a sensing service in the fourth state is lower than a KPI of a sensing service in the second state;
   a KPI of a sensing service in the fourth state is lower than a KPI of a sensing service in the third state;
   a KPI of a sensing service in the second state is higher than or equal to a given KPI threshold of the sensing service;
   a KPI of a sensing service in the third state is higher than or equal to a given KPI threshold of the sensing service.

According to the sensing method provided by an embodiment of the present application, the state management information of the sensing procedure includes one or more of following:
one or more states included in the sensing procedure;
an initial state of the sensing procedure;
a KPI of the sensing procedure;
a service type identifier of the sensing service;
an identifier of a node that manages the state of the sensing procedure;
an identifier of a node that allocates the wireless sensing resource for the sensing service.

According to an embodiment of the present application, a sensing method performed by a sensing server is provided. The method includes:
sending state management information and/or resource indication information of a sensing procedure to a base station or a terminal, where the state management information is used to indicate a state of the sensing procedure and/or a sensing service key performance indicator (KPI), and the resource indication information is used to indicate a wireless sensing resource used for the sensing service, and the wireless sensing resource is associated with the state of the sensing procedure and/or the sensing service KPI.

According to the sensing method provided by an embodiment of the present application, the method further includes:
determining the state of the sensing procedure and/or the sensing service KPI.

According to the sensing method provided by an embodiment of the present application, the method further includes:
determining the wireless sensing resource used for the sensing service based on the state of the sensing procedure and/or the sensing service KPI.

According to the sensing method provided by an embodiment of the present application, determining the state of the sensing procedure and/or the sensing service KPI includes:
determining the state of the sensing procedure and/or the sensing service KPI based on state management information; or
receiving state update information of the sensing procedure sent from a terminal or a base station, and determining an updated state of the sensing procedure and/or an updated sensing service KPI based on the state update information of the sensing procedure, where the state update information of the sensing procedure is generated based on an obtained sensing result; or
updating the state of the sensing procedure and/or the sensing service KPI based on a historical sensing result or data in the sensing procedure.

According to the sensing method provided by an embodiment of the present application, the method further includes:
triggering the sensing service and determining state management information; or
receiving state management information sent from a base station or a terminal.

According to the sensing method provided by an embodiment of the present application, the method further includes:
sending the state update information of the sensing procedure to the base station or the terminal, where the state update information of the sensing procedure is used to indicate the updated state of the sensing procedure and/or the updated sensing service KPI.

According to the sensing method provided by an embodiment of the present application, the method further includes:
receiving resource indication information sent from a base station, and determining the wireless sensing resource used for the sensing service based on the resource indication information, where the resource indication information is generated based on the state of the sensing procedure and/or the sensing service KPI.

According to the sensing method provided by an embodiment of the present application, the state of the sensing procedure includes one or more of following:
a first state, a second state, a third state, or a fourth state;
the state of the sensing procedure meets one or more of following:
   a KPI of a sensing service in the first state is lower than a given KPI threshold of the sensing service;
   a KPI of a sensing service in the fourth state is lower than a given KPI threshold of the sensing service;
   a KPI of a sensing service in the first state is lower than a KPI of a sensing service in the second state;
   a KPI of a sensing service in the first state is lower than a KPI of a sensing service in the third state;
   a KPI of a sensing service in the fourth state is lower than a KPI of a sensing service in the second state;
   a KPI of a sensing service in the fourth state is lower than a KPI of a sensing service in the third state;
   a KPI of a sensing service in the second state is higher than or equal to a given KPI threshold of the sensing service;
   a KPI of a sensing service in the third state is higher than or equal to a given KPI threshold of the sensing service.

According to the sensing method provided by an embodiment of the present application, the state management information of the sensing procedure includes one or more of following:
one or more states included in the sensing procedure;
an initial state of the sensing procedure;
a KPI of the sensing procedure;
a service type identifier of the sensing service;
an identifier of a node that manages the state of the sensing procedure;
an identifier of a node that allocates the wireless sensing resource for the sensing service.

According to an embodiment of the present application, a terminal is provided. The terminal includes: a memory, a transceiver, and a processor,
where the memory is used for storing a computer program; the transceiver is used for receiving and transmitting data under control of the processor; and the processor is used for reading the computer program in the memory and implementing the steps of the sensing method described above.

According to an embodiment of the present application, a base station is provided. The base station includes: a memory, a transceiver, and a processor.
where the memory is used for storing a computer program; the transceiver is used for receiving and transmitting data under control of the processor; and the processor is used for reading the computer program in the memory and implementing the steps of the sensing method described above.

According to an embodiment of the present application, a sensing server is provided. The sensing server includes: a memory, a transceiver, and a processor.
where the memory is used for storing a computer program; the transceiver is used for receiving and transmitting data under control of the processor; and the processor is used for reading the computer program in the memory and implementing the steps of the sensing method described above.

According to an embodiment of the present application, a sensing apparatus is provided. The sensing apparatus includes:
a first determining module, used for determining a wireless sensing resource for a sensing service, where the wireless sensing resource is associated with a state of a sensing procedure and/or a sensing service key performance indicator (KPI); and
a first transmitting module, used for sending or receiving a sensing signal or channel based on the wireless sensing resource.

According to an embodiment of the present application, a sensing apparatus is provided. The sensing apparatus includes:
a second determining module, used for determining a wireless sensing resource for a sensing service, where the wireless sensing resource is associated with a state of a sensing procedure and/or a sensing service key performance indicator (KPI); and
a second transmitting module, used for sending or receiving a sensing signal or channel based on the wireless sensing resource.

According to an embodiment of the present application, a sensing apparatus is provided. The sensing apparatus includes:
a sending module, used for sending state management information and/or resource indication information of a sensing procedure to a base station or a terminal, where the state management information is used to indicate a state of the sensing procedure and/or a sensing service key performance indicator (KPI), and the resource indication information is used to indicate a wireless sensing resource used for the sensing service, and the wireless sensing resource is associated with the state of the sensing procedure and/or the sensing service KPI.

According to an embodiment of the present application, a computer-readable storage medium is provided, where the computer-readable storage medium stores computer programs that cause a processor to perform the sensing method performed by the terminal.

According to an embodiment of the present application, a computer-readable storage medium is provided, where the computer-readable storage medium stores computer programs that cause a processor to perform the sensing method performed by the base station.

According to an embodiment of the present application, a computer-readable storage medium is provided, where the computer-readable storage medium stores computer programs that cause a processor to perform the sensing method performed by the sensing server.

Embodiments of the present application provide sensing methods and apparatuses, which decompose a sensing service requirement of an application layer into multiple states. Different states correspond to different wireless sensing resource allocation strategies, which may meet the service requirement while saving air interface resources.

### BRIEF DESCRIPTION OF THE DRAWINGS

In order to clearly illustrate the solutions according to the embodiments of the present application or the related art, the accompanying drawings used in the description of the embodiments or the related art are briefly introduced below. It should be noted that the drawings in the following description are only some embodiments of the present application. For those of ordinary skill in the art, other drawings may be obtained according to these drawings without creative efforts.
FIG. 1 is a schematic diagram of a bistatic sensing and a monostatic sensing provided by the related art;
FIG. 2 is a schematic diagram of a sensing network structure and procedure provided by the related art;
FIG. 3 is a first schematic flowchart of a sensing method provided by an embodiment of the present application;
FIG. 4 is a schematic diagram of sensing service states and conversion relationships provided by an embodiment of the present application;
FIG. 5 is a second schematic flowchart of a sensing method provided by an embodiment of the present application;
FIG. 6 is a third schematic flowchart of a sensing method provide by an embodiment of the present application;
FIG. 7 is a schematic diagram of an application scenario of autonomous driving with assisted sensing provided by an embodiment of the present application;
FIG. 8 is a schematic diagram of a state management and a sensing procedure of autonomous driving with assisted sensing provided by an embodiment of the present application;
FIG. 9 is a schematic structural diagram of a terminal provided by an embodiment of the present application;
FIG. 10 is a schematic structural diagram of a base station provided by an embodiment of the present application;
FIG. 11 is a schematic structural diagram of a sensing server provided by an embodiment of the present application;
FIG. 12 is a first schematic structural diagram of a sensing apparatus provided by an embodiment of the present application;
FIG. 13 is a second schematic structural diagram of a sensing apparatus provided by an embodiment of the present application; and
FIG. 14 is a third schematic structural diagram of a sensing apparatus provided by an embodiment of the present application.

### DETAILED DESCRIPTION

The term "and/or" in the embodiments of the present application describes three situations of the related objects. For example, A and/or B may represent three situations: only A, A and B together, and only B. The character "/" generally represents that the two objects on two sides have a relationship of "or". The character "/" generally represents that the two objects on two sides have a relationship of "or".

The terms "multiple" and "a plurality of" in the embodiments of the present application refer to two or more, and other quantifiers are similar to them.

The solutions according to the present application are clearly and completely described below in combination with the accompanying drawings in the embodiments of the present application. It should be noted that the described embodiments are some embodiments of the present application, rather than all the embodiments. Based on the embodiments of the present application, all other embodiments obtained by those of ordinary skill in the art without creative effort are within the scope of protection of the present application.

According to sensing methods and apparatuses provided by embodiments of the present application, the wireless sensing resource is allocated based on the requirements of the sensing service, which may meet the service requirements while saving air interface resources.

It should be noted that the methods and the apparatuses according to the embodiments of the present application are based on the same conception. Since the principles of the methods and the apparatuses to solve the problems are similar, the implementation of the apparatus and method may be similar to each other, and the same part will not be repeated.

The technical solutions provided by the embodiments of the present disclosure may be applied to a variety of systems, especially 5G systems and future 6G systems. For example, an applicable system may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, and the like. Each of these various systems includes a terminal device and a network device. The system may also include a core network and a sensing server, such as an evolved packet system (EPS), a 5G system (5GS), and the like.

First, the following is introduced.

In related art, integrated sensing and communications (ISAC) is an important candidate evolution feature. In case that a sensing procedure is introduced into a mobile communication system, the management of the sensing procedure is involved. The sensing procedure here focuses on the wireless resource allocation procedure (including a time-domain resource, a frequency-domain resource, a code-domain resource, a spatial-domain resource, etc., as well as a sending power for sending a sensing signal).

### ISAC basic concepts:

A basic idea of ISAC is to introduce wireless sensing functions into wireless mobile communications. Wireless sensing involves sensing environmental information through radio signals. The environmental information includes a distribution, a size, a number, a temperature of objects in the environment, human movements and behaviors, and even human breathing rate, heart rate, etc. The principle of wireless sensing is relatively simple: a radio signal is transmitted toward the environment to be sensed, while a receiver collects the radio signals that are reflected, scattered, and transmitted through multiple paths. Since the collected radio signals pass through the environment, they carry information about the environment. After receiving the signals, complex signal processing is performed, the characteristics of the environment may be discovered, and the sensed environment may be reconstructed on the computer, including identifying people and objects in the environment, detecting temperature, detecting human movements, and even human breathing rate, heart rate, etc. This technology is used in areas such as personnel health monitoring and security.

Wireless sensing is generally divided into monostatic sensing and bistatic sensing. The monostatic sensing means that the base station (or terminal) actively sends a sensing signal. After the sensing signal is reflected by the sensed object, the base station (or terminal) receives the reflected sensing signal. The bistatic sensing means that the base station (or terminal) actively sends a sensing signal, which passes through the wireless channel and is received by the other terminal (or base station).

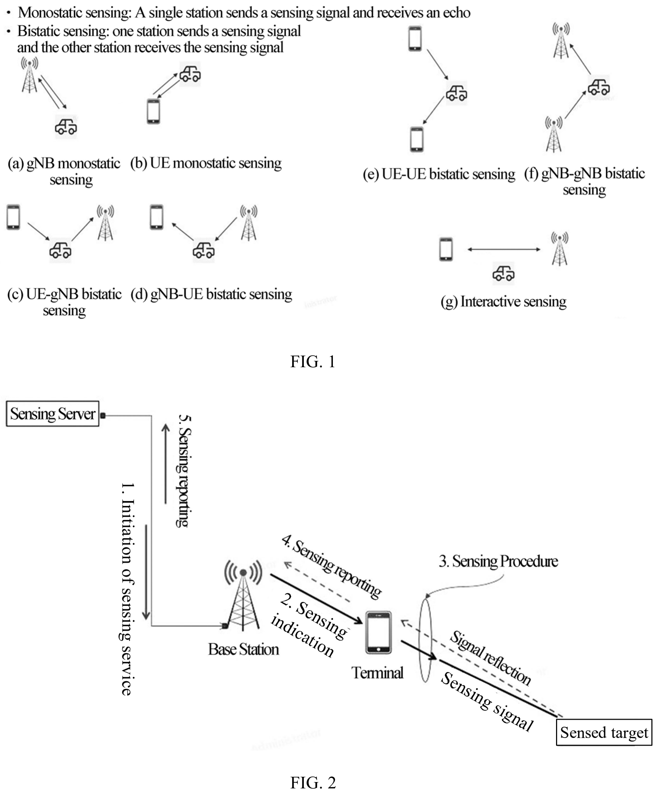

FIG. 1 is a schematic diagram of a monostatic sensing and a bistatic sensing provided by the related art. As shown in FIG. 1, the monostatic sensing includes: a base station monostatic sensing, and a terminal monostatic sensing. The bistatic sensing includes: UE-UE, gNB-gNB, UE-gNB, and gNB-UE sensing.

### Sensing network structures and procedures:

In case that the sensing function is introduced into a wireless mobile network, it is generally believed that a sensing server needs to be added to the network. The sensing server is used to manage a wireless sensing service. Functions may include: sensing authorization, sensing control, sensing measurement data processing and result output.

FIG. 2 is a schematic diagram of a sensing network structure and procedure provided by the related art. As shown in FIG. 2, taking the terminal monostatic sensing method as an example, a sensing server is introduced into the sensing network. An aggregation of relevant sensing services and sensing results is completed by the sensing server. The steps are as follows.

Step 1, initiation of a sensing service.

This step is performed by the sensing server and the service is sent to the base station that needs to perform a sensing task, or a terminal in an area covered by the base station.

Step 2, sensing indication.

This step is performed by the base station. The base station indicates the UE in the coverage area to perform the wireless sensing procedure according to the initiated service by the sensing server.

Step 3, perform the sensing procedure.

This step is performed by the terminal; the terminal sends a wireless sensing signal, collects relevant reflected signals, and processes the reflected signals. The sensing information (such as sensing results or sensing data) is generated.

Step 4, sensing reporting procedure.

The terminal reports the sensing information to the sensing server. The relevant sensing information is processed by the sensing server.

Step 5, sensing reporting procedure.

The base station reports the sensing information to the sensing server. The relevant sensing information is processed by the sensing server.

Whether the base station or the terminal performs the sensing procedure, in order to reduce interference to other communication/sensing nodes, the wireless sensing resource needs to be allocated. The wireless sensing resource includes a time-domain resource, a frequency-domain resource, a code-domain resource, a spatial-domain resource, etc., and also include a sending power of sending a sensing signal. In case that the sensing server initiates a sensing service, how to more effectively allocate wireless resource according to requirements of the sensing service is a problem that needs to be solved. However, there is no description of relevant technical solutions in the related art.

According to sensing methods and apparatuses provided by embodiments of the present application, the wireless sensing resource is allocated according to the requirement of the sensing service, which may meet the service requirement while saving air interface resources.

The following describes the sensing method provided by the embodiment of the present application.

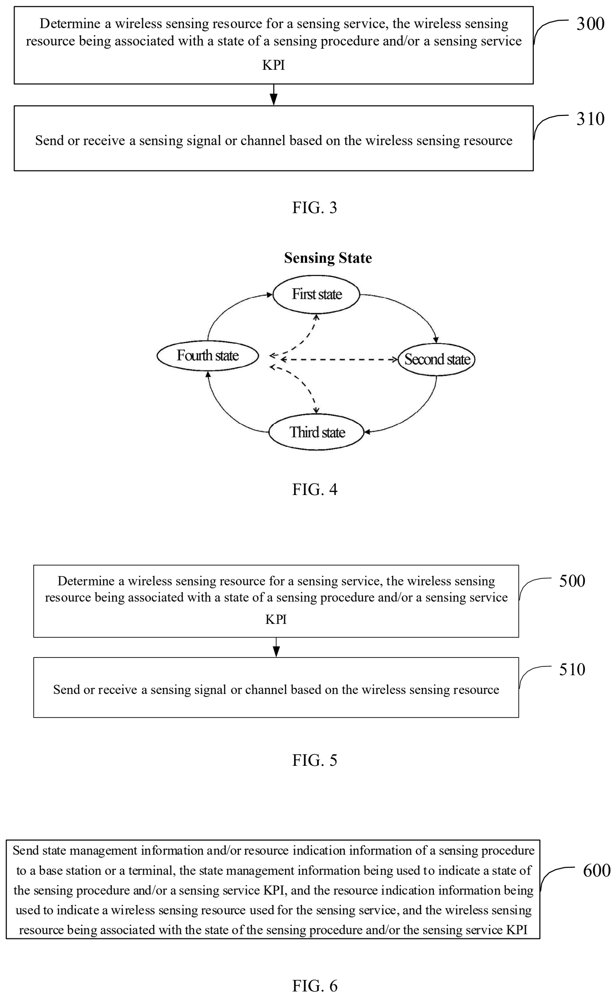

FIG. 3 is a first schematic flowchart of a sensing method provided by an embodiment of the present application. As shown in FIG. 3, the embodiment of the present application provides a sensing method, the execution body of which may be a terminal, such as a mobile phone. The method includes the following steps.

Step 300, determine a wireless sensing resource for a sensing service, where the wireless sensing resource is associated with a state of a sensing procedure and/or a sensing service key performance indicator (KPI).

In an embodiment, the sensing service may be any service that requires to perform a sensing procedure, such as autonomous driving, logistics, or security.

In an embodiment, the wireless sensing resource may be one or more of a time-domain resource, a frequency-domain resource, a spatial-domain resource, a code-domain resource, or a sensing power.

In an embodiment, the state of the sensing procedure may be a state set for the sensing procedure based on the requirements of the sensing service. For example, if the requirements of the sensing service are different, the states of the sensing procedure may be different, the wireless sensing resources required for different states may be different, or the scheduling priorities may be different.

In an embodiment, the sensing service KPI may be an indicator set based on the requirements of the sensing service.

For example, in case that the sensing service is autonomous driving, the sensing service KPI may be a sensing range of 1 km, a refresh rate of 0.1 s, or a maximum sensing delay of 1500 ms, etc.

For example, in case that the sensing service is security, the sensing service KPI may be a sensing range of 3km, a refresh rate of 0.01s, or a maximum sensing delay of 500 ms, etc.

In an embodiment, the sensing service KPI may be given, or adjusted in real time based on the state of the sensing procedure.

In an embodiment, the state of the sensing procedure and the sensing service KPI may be correlated. For example, a state requiring more wireless sensing resources may correspond to a higher KPI.

In an embodiment, the sensing service KPI may be regarded as the type of the sensing service, and the sensing service KPI may be associated with an identifier of the sensing service type.

In an embodiment, in order to more reasonably allocate the wireless sensing resource according to the requirements of the sensing service, the wireless sensing resource used for the sensing service may be determined based on the state of the sensing procedure and/or the sensing service KPI.

Step 310, send or receive a sensing signal or channel based on the wireless sensing resource.

In an embodiment, in case that the terminal is a sensing device, after determining the wireless sensing resource, the terminal may perform a sensing procedure based on the wireless sensing resource, such as sending or receiving a sensing signal or channel.

For example, the terminal may determine that the wireless sensing resource is a time-domain resource, and the terminal may perform a sensing procedure within the time-domain resource, such as sending or receiving a sensing signal or channel.

In an embodiment, since different states of the sensing procedure may require different wireless sensing resources, the terminal sends or receives sensing signals or channels in different states of the sensing procedure, which may achieve more efficient allocation of wireless sensing resources according to the requirements of the sensing service and save air interface resources.

In an embodiment, the terminal may determine the wireless sensing resource for the sensing service based on the configuration of the base station or the indication of the sensing server. The wireless sensing resource is determined by the base station or the sensing server based on the state of the sensing procedure and/or the sensing service KPI. The terminal may then perform the current sensing procedure based on the wireless sensing resource, such as sending or receiving a sensing signal or channel.

The sensing method provided by the embodiment of the present application decomposes the sensing service requirement of an application layer into multiple states. Different sensing procedure states may be allocated with different wireless sensing resources and scheduling priorities. The terminal sends or receives a sensing signal or channel in different sensing procedure states, which may achieve more efficient allocation of wireless sensing resources according to the requirements of the sensing service and save air interface resources.

In an embodiment, determining the wireless sensing resource for the sensing service includes any of following:
determining the wireless sensing resource based on the state of the sensing procedure and/or the sensing service KPI; or
receiving resource indication information sent from a base station or a sensing server, and determining the wireless sensing resource based on the resource indication information, where the resource indication information is generated based on the state of the sensing procedure and/or the sensing service KPI.

In an embodiment, in case that the terminal is a sensing device (a device that performs a sensing procedure or a device that sends or receives a sensing signal or channel), after determining the wireless sensing resource, the terminal may perform a sensing procedure based on the wireless sensing resources, such as sending or receiving a sensing signal or channel.

In an embodiment, in case that the wireless sensing resource corresponding to the state of the sensing procedure and/or the sensing service KPI have been preconfigured or predefined, the terminal may directly determine the wireless sensing resource based on the state of the sensing procedure and/or the sensing service KPI.

In an embodiment, in case that the base station is a node (sensing resource allocation node) that allocates wireless sensing resources for the sensing service, the base station may configure suitable wireless sensing resources for the current sensing service based on the state of the sensing procedure and/or the sensing service KPI; in case that the sensing device is a terminal, the base station sends resource indication information to the terminal, and after receiving the resource indication information, the terminal determines the wireless sensing resource and performs the sensing procedure; in case that the sensing device is a base station, after configuring the suitable wireless sensing resources for the current sensing service, the base station directly performs the sensing procedure within the wireless sensing resources.

In an embodiment, in case that the sensing server is a node (sensing resource allocation node) that allocates wireless sensing resources for the sensing service, the sensing server may generate resource indication information based on the state of the sensing procedure and/or the sensing service KPI, and then the sensing server sends the resource indication information to the terminal and/or the base station; in case that the sensing device is a terminal, after receiving the resource indication information, the terminal determines the wireless sensing resource and performs the sensing procedure; in case that the sensing device is a base station, after receiving the resource indication information, the base station determines the wireless sensing resource and performs the sensing procedure.

In an embodiment, the sensing method further includes:
determining the state of the sensing procedure and/or the sensing service KPI.

In an embodiment, in case that the terminal is a node (sensing state management node) that manages the state of the sensing procedure, the terminal may determine the state of the sensing procedure and/or the sensing service KPI.

In an embodiment, in case that the terminal is a node (sensing state management node) that manages the state of the sensing procedure, the terminal may determine the state of the sensing procedure and/or the sensing service KPI, and inform the base station and/or the sensing server each time the state of the sensing procedure and/or the sensing service KPI is updated.

For example, in case that the terminal is a node (sensing state management node) that manages the state of the sensing procedure, the terminal may determine that the state of the current sensing procedure is state A at time a and determine that the state of the current sensing procedure is state B at time b.

For example, in case that the terminal is a node (sensing state management node) that manages the state of the sensing procedure, the terminal may determine that the state of the current sensing procedure is state A at time a, and inform the base station and/or sensing server; and determine that the state of the current sensing procedure is state B at time b after time a, and inform the base station and/or sensing server.

In an embodiment, after the terminal determines the state of the sensing procedure and/or the sensing service KPI, or after the terminal informs the base station and/or the sensing server of the state of the sensing procedure and/or the sensing service KPI, the base station and/or the sensing server may allocate more suitable wireless sensing resources for the sensing service in the current state, and send the wireless sensing resources to the sensing device (such as the terminal and/or base station). The sensing device performs the sensing procedure within the wireless sensing resources.

For example, after the terminal determines that the state of the sensing procedure is state C (for example, a state where only coarse sensing is required) and informs the base station and/or the sensing server, the base station and/or the sensing server may allocate more suitable wireless sensing resources for the sensing service based on state C (for example, the wireless sensing resource that may just meet the coarse sensing procedure) and send them to the terminal. The terminal performs the sensing procedure within the wireless sensing resource, which may avoid the base station allocating too many wireless sensing resources for the sensing service that only requires coarse sensing, thereby saving resources.

For example, after the terminal determines that the state of the sensing procedure is state C (for example, a state where only coarse sensing is required) and informs the base station and/or the sensing server, the base station and/or the sensing server may allocate more suitable wireless sensing resources for the sensing service based on state C (for example, the wireless sensing resource that may just meet the coarse sensing procedure). The base station performs the sensing procedure within the wireless sensing resource, which may avoid the base station allocating too many wireless sensing resources for the sensing service that only requires coarse sensing, thereby saving resources.

In an embodiment, in case that the terminal is a node that manages the state of the sensing procedure, the terminal may also determine that the sensing device is a base station, or a terminal, or a base station and a terminal.

In an embodiment, in case that the terminal is a node that manages the state of the sensing procedure, the terminal may also determine the sensing mode as monostatic sensing and/or bistatic sensing.

In an embodiment, in case that the base station and/or the sensing server is a node (sensing state management node) that manages the state of the sensing procedure, after the base station and/or the sensing server determines the state of the sensing procedure and/or the sensing service KPI, the state of the sensing procedure and/or the sensing service KPI may be sent to the terminal, such as by informing the terminal through the state update information of the sensing procedure or the state management information of the sensing procedure. The terminal may then obtain the state of the sensing procedure and/or the sensing service KPI.

In an embodiment, determining the state of the sensing procedure and/or the sensing service KPI includes:
determining the state of the sensing procedure and/or the sensing service KPI based on state management information; or
receiving state update information of the sensing procedure sent from a sensing server or a base station, and determining an updated state of the sensing procedure and/or an updated sensing service KPI based on the state update information of the sensing procedure; or
updating the state of the sensing procedure and/or the sensing service KPI based on a historical sensing result or data in the sensing procedure.

In an embodiment, the state management information may be relevant information used to determine the state of the sensing procedure and/or the sensing service KPI.

In an embodiment, the state management information may be obtained by the terminal itself, or sent to the terminal after being determined by the base station and/or the sensing server.

In an embodiment, the terminal may determine the state of the sensing procedure and/or the sensing service KPI based on state management information.

In an embodiment, in case that the terminal is a node (sensing state management node) that manages the state of the sensing procedure, the terminal may determine the state of the sensing procedure and/or the sensing service KPI based the state management information.

In an embodiment, the historical sensing result or the data obtained may be the sensing result or data obtained after the sensing device sends or receives one or more sensing signals/channels.

In an embodiment, in case that the base station is a node (sensing state management node) that manages the state of the sensing procedure and the terminal is a sensing device, the base station may receive the sensing result or data sent from the terminal, update the state of the sensing procedure and/or the sensing service KPI based on the sensing result or data, generate state update information of the sensing procedure, and send the state update information of the sensing procedure to the terminal and/or the sensing server, to indicate/inform the terminal and/or the sensing server of the updated state of the sensing procedure and/or the updated sensing service KPI.

In an embodiment, in case that the sensing server is a node (sensing state management node) that manages the state of the sensing procedure and the terminal is a sensing device, the sensing server may receive the sensing result or data sent from the terminal, update the state of the sensing procedure and/or the sensing service KPI based on the sensing result or data, generate state update information of the sensing procedure, and send the state update information of the sensing procedure to the terminal and/or base station to indicate/inform the terminal and/or base station of the updated state of the sensing procedure and/or sensing service KPI.

In an embodiment, in case that the sensing server is a node (sensing state management node) that manages the state of the sensing procedure and the base station is a sensing device, the sensing server may receive the sensing result or data sent from the base station, update the state of the sensing procedure and/or the sensing service KPI based on the sensing result or data, generate state update information of the sensing procedure, and send the state update information of the sensing procedure to the terminal and/or base station to indicate/inform the terminal and/or base station of the updated state of the sensing procedure and/or the updated sensing service KPI.

In an embodiment, in case that the base station is a node (sensing state management node) that manages the state of the sensing procedure and a sensing device, the base station may update the state of the sensing procedure and/or the sensing service KPI based on the sensing result or data obtained after sending or receiving one or more sensing signals/channels, generate state update information of the sensing procedure, and send the state update information of the sensing procedure to the terminal and/or the sensing server to indicate/inform the terminal and/or the sensing server of the updated state of the sensing procedure and/or the updated sensing service KPI.

In an embodiment, the base station and/or the sensing server may send the state update information of the sensing procedure through an independent signaling, or send he state update information of the sensing procedure together with other messages.

In an embodiment, the base station and/or the sensing server may periodically send state update information of the sensing procedure, or dynamically send state update information of the sensing procedure.

In an embodiment, in case that the terminal is a node (sensing state management node) that manages the state of the sensing procedure and the base station is a sensing device, the terminal may receive the sensing result or data sent from the base station and determine the updated state and/or sensing service KPI.

In an embodiment, in case that the terminal is a node (sensing state management node) that manages the state of the sensing procedure and the terminal is a sensing device, the terminal may directly determine the updated state and/or the updated sensing service KPI based on the sensing result or data obtained during the sensing procedure.

In an embodiment, in case that the terminal is a node (sensing state management node) that manages the state of the sensing procedure and both the base station and the terminal are sensing devices, the terminal may receive the sensing result or data sent from the base station, and determine the updated state and/or the updated sensing service KPI in combination with the sensing result or data obtained by the terminal.

For example, a sensing service is shared by two base stations. At the early warning screening stage, both base stations perform the sensing procedure. However, due to the mobility of the sensed object, the early warning confirmation state only needs to be completed by base station P. At this time, the sensing service of the other base station Q is in an idle state. After a certain period of time, if the sensed object moves into the coverage range of base station Q again, base station Q may determine that the state of the sensing procedure is updated to target tracking or early warning confirmation state.

In an embodiment, in case that the sensing state changes (or in case that the sub-procedure changes), such as from early screening warning to early screening confirmation, the sensing behavior of the sensing device is not "starting again", but uses the historical sensing result or data obtained (such as some sensing results or data obtained in the early screening warning state) to quickly perform warning confirmation. That is, the sensing device performs the next step of sensing based on the historical result of the early screening warning, which may speed up the sensing procedure and improve sensing accuracy and reliability.

In an embodiment, the sensing method further includes:
triggering the sensing service and determining state management information; or
receiving state management information sent from a sensing server or a base station.

In an embodiment, in case that the terminal is a node (sensing state management node) that manages the state of the sensing procedure, the terminal may trigger the sensing service and determine the state management information according to the sensing request initiated by an application.

In an embodiment, after determining the state management information, the terminal may determine the state of the sensing procedure and/or the sensing service KPI directly based on state management information.

In an embodiment, after determining the state management information, the terminal may send the state management information to the base station and/or the sensing server, and the base station and/or the sensing server may determine the state of the sensing procedure and/or the sensing service KPI based on the state management information.

In an embodiment, after the base station and/or the sensing server determines the state of the sensing procedure and/or the sensing service KPI based on the state management information, the base station and/or the sensing server may determine the wireless sensing resource based on the state of the sensing procedure and/or the sensing service KPI. The sensing device may perform the sensing procedure within the wireless sensing resource, such as receiving or sending a sensing signal or channel.

In an embodiment, in case that the sensing server is a node (sensing state management node) that manages the state of the sensing procedure, the sensing server may trigger the sensing service based on the sensing request initiated by the application, determine the state management information, further determine the state of the sensing procedure and/or the sensing service KPI based on the state management information, and inform the base station and/or terminal.

In an embodiment, the sensing server may trigger the sensing service based on the sensing request initiated by the application, and determine the state management information, and further send the state management information to the base station and/or terminal. The base station and/or terminal determines the state of the sensing procedure and/or the sensing service KPI based on the state management information.

In an embodiment, the sensing method further includes:
sending the state management information to the sensing server or the base station.

In an embodiment, the terminal may trigger the sensing service and determine the state management information based on the sensing request initiated by the application.

In an embodiment, after the terminal determines the state management information, in case that the sensing server is a node (sensing resource allocation node) that allocates wireless sensing resources for the sensing service, the state management information may be sent to the base station and/or sensing server to determine the state of the sensing procedure and/or the sensing service KPI.

In an embodiment, after the terminal determines the state management information, in case that the sensing server is a node (sensing resource allocation node) that allocates wireless sensing resources for the sensing service, the state management information may be sent to the sensing server. After receiving the state management information, the sensing server may determine the state of the sensing procedure and/or the sensing service KPI based on the state management information, and further allocate suitable wireless sensing resource for the current sensing procedure. The sensing device may receive or send a sensing signal or channel within the wireless sensing resource.

In an embodiment, the sensing device may receive resource indication information sent from the sensing server and determine the wireless sensing resource based on the resource indication information. The sensing device may then perform a sensing procedure based on the wireless sensing resource, such as sending or receiving a sensing signal or channel.

In an embodiment, after the terminal determines the state management information, in case that the base station is a node (sensing resource allocation node) that allocates wireless sensing resources for the sensing service, the state management information may be sent to the base station. After receiving the state management information, the base station may determine the state of the sensing procedure and/or the sensing service KPI based on the state management information, and further allocate the suitable wireless sensing resource for the current sensing procedure so that the sensing device may receive or send a sensing signal or channel within the wireless sensing resource.

In an embodiment, the base station may receive the state management information sent from the terminal, and then determine the state of the sensing procedure and/or the sensing service KPI based on the state management information.

In an embodiment, after receiving the state management information, the base station may determine the state of the sensing procedure and/or the sensing service KPI based on the state management information, and further allocate suitable wireless sensing resources for the current sensing procedure, such as indicating the wireless sensing resource to the terminal through resource indication information so that the terminal may receive or send a sensing signal or channel within the wireless sensing resource; or the base station may receive or send a sending signal or channel within the wireless sensing resource.

In an embodiment, the sensing method further includes:
sending the state update information of the sensing procedure to the sensing server or the base station, where the state update information of the sensing procedure is used to indicate the updated state of the sensing procedure and/or the updated sensing service KPI.

In an embodiment, in case that the terminal is a node (radio state management node) that manages the state of the sensing procedure, the terminal may determine an updated state and/or an updated sensing service KPI based on the obtained historical sensing result or data.

For example, in case that the sensing device is a base station, the sensing result or data sent from the base station may be received to determine the updated state and/or the updated sensing service KPI.

For example, in case that the sensing device is a terminal, the terminal may directly determine an updated state and/or an updated sensing service KPI based on sensing result information or data obtained through sensing.

In an embodiment, after the terminal determines the updated state and/or sensing service KPI, the state update information of the sensing procedure may be generated based on the updated state and/or the updated sensing service KPI. The state update information of the sensing procedure may be sent to the node that allocates the wireless sensing resource for the sensing service (sensing resource allocation node), such as a sensing server or base station.

In an embodiment, in case that the base station is a node (sensing resource allocation node) that allocates wireless sensing resources for the sensing service, the base station may receive state update information of the sensing procedure sent from the terminal, and determine the updated state and/or the updated sensing service KPI based on the state update information of the sensing procedure.

In an embodiment, in case that the terminal is a sensing device, after the sensing server and/or base station determine the updated state and/or the updated sensing service KPI, the resource indication information may be generated based on the updated state and/or the updated sensing service KPI, and then the resource indication information may be sent to the terminal.

In an embodiment, the terminal may receive resource indication information sent from the base station, and determine updated wireless sensing resource based on the resource indication information, and then perform a sensing procedure based on the updated wireless sensing resource, such as sending or receiving a sensing signal or channel.

In an embodiment, in case that the base station is a sensing device, after determining the updated state and/or the updated sensing service KPI, the base station may directly determine the updated wireless sensing resource based on the updated state and/or sensing service KPI, and then the base station may perform the sensing procedure based on the updated wireless sensing resource, such as sending or receiving a sensing signal or channel.

In an embodiment, in case that the sensing server is a node (sensing resource allocation node) that allocates wireless sensing resources for the sensing service, the sensing server may receive state update information of the sensing procedure sent from the terminal, and determine the updated state and/or the updated sensing service KPI based on the state update information of the sensing procedure.

In an embodiment, in case that the terminal is a sensing device, after the sensing server determines the updated state and/or the updated service KPI, the resource indication information may be generated based on the updated state and/or the updated sensing service KPI, and then the resource indication information may be sent to the terminal.

In an embodiment, the terminal may receive resource indication information sent from the sensing server, and determine updated wireless sensing resource based on the resource indication information, and then perform a sensing procedure based on the updated wireless sensing resource, such as sending or receiving a sensing signal or channel.

In an embodiment, in case that the base station is a sensing device, after the sensing server determines the updated state and/or the updated service KPI, the resource indication information may be generated based on the updated state and/or the updated service KPI, and then the resource indication information may be sent to the base station.

In an embodiment, the base station may receive resource indication information sent from the sensing server, and determine updated wireless sensing resource based on the resource indication information, and then perform a sensing procedure based on the updated wireless sensing resource, such as sending or receiving a sensing signal or channel.

In an embodiment, the state of the sensing procedure includes one or more of following:
a first state, a second state, a third state, or a fourth state;
the state of the sensing procedure meets one or more of following:
   a KPI of a sensing service in the first state is lower than a given KPI threshold of the sensing service;
   a KPI of a sensing service in the fourth state is lower than a given KPI threshold of the sensing service;
   a KPI of a sensing service in the first state is lower than a KPI of a sensing service in the second state;
   a KPI of a sensing service in the first state is lower than a KPI of a sensing service in the third state;
   a KPI of a sensing service in the fourth state is lower than a KPI of a sensing service in the second state;
   a KPI of a sensing service in the fourth state is lower than a KPI of a sensing service in the third state;
   a KPI of a sensing service in the second state is higher than or equal to a given KPI threshold of the sensing service; or
   a KPI of a sensing service in the third state is higher than or equal to a given KPI threshold of the sensing service.

In an embodiment, the state of the sensing procedure may include any of following:
1. the first state;
2. the second state;
3. the third state;
4. the fourth state;
5. the first state and the second state;
6. the first state and the third state;
7. the first state and the fourth state;
8. the second state and the third state;
9. the second state and the fourth state;
10. the third state and the fourth state;
11. the first state, the second state and the third state;
12. the first state, the second state and the fourth state;
13. the first state, the third state and the fourth state;
14. the second state, the third state, and the fourth state; or
15. the first state, the second state, the third state, and the fourth state.

In an embodiment, the given KPI threshold of the sensing service may be a KPI requirement of the sensing service itself. For example, in case that the sensing service is autonomous driving, the maximum sensing delay requirement is 1500 ms; in case that the sensing service is security, the maximum sensing delay requirement is 500 ms.

In an embodiment, the first state may be an "early warning screening" state, which may be the first state of the sensing procedure. The KPI requirement of the sensing service in the first state may be lower than the given KPI threshold of the sensing service, and the wireless sensing resources required to be allocated to the sensing service in the first state may be less than the given wireless sensing resource threshold of the sensing service.

In an embodiment, the second state may be a "warning confirmation" state, in which the KPI requirement of the sensing service may be greater than or equal to the given KPI threshold of the sensing service, and the wireless sensing resources required to be allocated to the sensing service in the second state may be greater than or equal to the given wireless sensing resource threshold of the sensing service.

In an embodiment, the third state may be a "target tracking" state, in which the KPI requirement of the sensing service may be greater than or equal to the given KPI threshold of the sensing service, and the wireless sensing resources required to be allocated to the sensing service in the third state may be greater than or equal to the given wireless sensing resource threshold of the sensing service.

In an embodiment, the fourth state may be an "idle" state, which is a temporary state in the sensing procedure, indicating that the sensing node does not need to perform the sensing procedure, or the KPI requirement of the sensing service in the fourth state is lower than the given KPI threshold of the sensing service, and the wireless sensing resources that need to be allocated to the sensing service in the fourth state may be less than the given wireless sensing resource threshold of the sensing service.

In an embodiment, the KPI requirement of the sensing service in the first state may be lower than the KPI requirement of the sensing service in the second state, and the wireless sensing resources required to be allocated to the sensing service in the first state are less than the wireless sensing resources required to be allocated to the sensing service in the second state.

In an embodiment, the KPI requirement of the sensing service in the first state may be lower than the KPI requirement of the sensing service in the third state, and the wireless sensing resource required to be allocated to the sensing service in the first state are less than the wireless sensing resource required to be allocated to the sensing service in the third state.

In an embodiment, the KPI requirement of the sensing service in the fourth state may be lower than the KPI requirement of the sensing service in the second state, and the wireless sensing resources required to be allocated to the sensing service in the fourth state are less than the wireless sensing resources required to be allocated to the sensing service in the second state.

In an embodiment, the KPI requirement of the sensing service in the fourth state may be lower than the KPI requirement of the sensing service in the third state, and the wireless sensing resources required to be allocated to the sensing service in the fourth state are less than the wireless sensing resources required to be allocated to the sensing service in the second state.

FIG. 4 is a schematic diagram of sensing service states and conversion relationships provided by an embodiment of the present application. Reference is made to FIG. 4.

In an embodiment, in case that the sensing device in the first state initially senses the target, the sensing device may switch to the second state to obtain more accurate sensing results. Accordingly, the first state is called the "early warning screening" state, and the state characteristics are: lower sensing KPI requirements, fewer allocated wireless resources, and lower priority.

In an embodiment, in case that the sensing device in the second state accurately senses the target, the sensing device switch the third state or the fourth state based on the indication of the node that manages the state of the sensing procedure. Correspondingly, the second state is called the "early warning confirmation" state, and the state characteristics are: higher sensing KPI requirements, more allocated wireless resources, and higher priority.

In an embodiment, the sensing device in the third state may use historical sensing data or sensing results to require fewer wireless sensing resources. Accordingly, the third state is called the "target tracking" state; the state characteristics are: high sensing KPI requirements, fewer allocated wireless resources, and moderate priority.

In an embodiment, the sensing device in the third state may periodically report the target tracking results and continue the third state or switch to other states based on the indication of the node that manages the state of the sensing procedure.

In an embodiment, the sensing device in the fourth state may stop performing the sensing procedure, or perform a sensing procedure that requires very few wireless sensing resources, and continue the fourth state or switch to other states according to the indication of the node that manages the state of the sensing procedure. Accordingly, the fourth state is called the "idle state"; the state characteristics are: least allocated wireless resources (such as: no sensing resource), and lowest priority.

In an embodiment, the fourth state and other states may switch bidirectionally, for example, the fourth state may switch to the first state, or from the first state to the fourth state.

For example, two base stations share a sensing task. In the first state, both base stations perform sensing. However, due to the mobility of the sensed object, only one base station is required to complete the second state, and the other base station may be in the fourth state. Furthermore, after a certain period of time, if the sensed object moves to the base station in the fourth state, the base station directly enters the third state or the second state.

In an embodiment, the state of the sensing service is invisible to the base station or terminal. The sensing server and the base station and/or terminal adopt an interactive sensing method, that is, the base station and/or terminal performs one sensing, sends the sensing result to the sensing server, and the sensing server updates the sensing parameters and the base station and/or terminal performs another sensing. In this way, in fact, a sensing service is divided into multiple sub-procedures. In case that the state of the sensing procedure changes, such as from the first state to the second state, the sensing behavior of the sensing device does not start from the beginning, but uses some sensing results or data of the first state to quickly proceed to the second state. That is, the sensing device performs the next step of sensing based on the historical results of the first state, which may speed up the sensing procedure and improve sensing accuracy and reliability.

In an embodiment, in case that the sensing device and the node managing the state of the sensing procedure are not the same device, indication information is required to indicate the correlation between the two different states. The indication information may be the same service identifier (ID) or other indication information.

In an embodiment, the state management information includes one or more of the following:
one or more states included in the sensing procedure;
an initial state of the sensing procedure;
a KPI of the sensing procedure;
a service type identifier of the sensing service;
an identifier of a node that manages the state of the sensing procedure;
an identifier of a node that allocates the wireless sensing resource for the sensing service.

In an embodiment, the state included in the sensing procedure may be the state of the sensing procedure included in the sensing service, such as one or more of the first state, the second state, the third state, or the fourth state.

In an embodiment, the initial state of the sensing procedure may be a state selected from the states included in the sensing procedure, which is the most suitable state to be used as the initial state of the sensing service, such as the first state.

For example, taking autonomous driving as an example of a sensing service, considering that it only makes sense for the base station to send a sensing signal in case that a vehicle passes through the sensing area and a vehicle requests sensing, it is more reasonable for the initial state of the sensing service to be in the fourth state before the vehicle requests.

In an embodiment, the KPI of the sensing service may be an indicator set based on the requirements of the sensing service.

For example, in case that the sensing service is autonomous driving, the sensing service KPI may be a sensing range of 1 km, a refresh rate of 0.1 s, or a maximum sensing delay of 1500 ms, etc.

For example, in case that the sensing service is security, the sensing service KPI may be a sensing range of 3km, a refresh rate of 0.01s, or a maximum sensing delay of 500 ms, etc.

In an embodiment, the service type identifier of the sensing service may be an identifier corresponding to the service type of the sensing service. The service type of the sensing service may be determined based on the identifier. and the sensing service KPI corresponding to the service type may be determined.

In an embodiment, the identifier of the node that manages the state of the sensing procedure may be the identifier corresponding to the node that manages the state of the sensing procedure. Based on the identifier, it may be determined that the node that manages the state of the sensing procedure is a terminal, a base station, or a sensing server.

In an embodiment, the identifier of the node that allocates wireless sensing resources for the sensing service may be the identifier corresponding to the node that allocates the wireless sensing resources for the sensing service. Based on the identifier, it may be determined that the node that allocates wireless sensing resources for the sensing service is a terminal, a base station, or a sensing server.

In an embodiment, in case that the terminal is a node (sensing state management node) that manages the state of the sensing procedure, the terminal may trigger the sensing service and determine one or more of following: the state included in the sensing procedure, the initial state of the sensing procedure, the KPI of the sensing service, the service type identifier of the sensing service, the identifier of the node that manages the state of the sensing procedure, or the identifier of the node that allocates wireless sensing resources for the sensing service.

In an embodiment, the terminal may send the state management information to a node (sensing resource allocation node) that allocates wireless sensing resources for the sensing service, such as a base station or a sensing server, to determine the state of the sensing procedure and/or the sensing service KPI.

In an embodiment, the terminal may receive one or more of the following sent from the base station or the sensing server: the state included in the sensing procedure, the initial state of the sensing procedure, the KPI of the sensing service, the service type identifier of the sensing service, the identifier of the node that manages the state of the sensing procedure and the identifier of the node that allocates wireless sensing resources for the sensing service, or determine the state of the sensing procedure and/or the KPI of the sensing service.

The terminal device according to the embodiments of the present application may be a device that provides voice and/or data connectivity to a user, a handheld device with a wireless connection function, or other processing devices connected to a wireless modem. In different systems, the name of the terminal device may also be different. For example, in the 5G system, the terminal device may be called user equipment (UE). A wireless terminal device may communicate with one or more core networks (CN) via a radio access network (RAN). The wireless terminal device may be a mobile terminal device, such as a mobile phone (or "cellular" phone) and a computer with a mobile terminal device, for example, a portable, pocket-sized, handheld, computer-built-in or vehicle-mounted mobile device, which exchanges voice and/or data with the radio access network. For example, a personal communication service (PCS) phone, a cordless phone, a session initiated protocol (SIP) phone, a wireless local loop (WLL) station, a personal digital assistant (PDA), and the like. The wireless terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present application.

FIG. 5 is a second schematic flowchart of a sensing method provided by an embodiment of the present application. As shown in FIG. 5, the embodiment of the present application provides a sensing method, the execution body of which may be a base station.

Step 500, determine a wireless sensing resource for a sensing service, where the wireless sensing resource is associated with a state of a sensing procedure and/or a sensing service key performance indicator (KPI).

In an embodiment, the sensing service may be any service that requires to perform a sensing procedure, such as autonomous driving, logistics, or security.

In an embodiment, the wireless sensing resource may be one or more of a time-domain resource, a frequency-domain resource, a spatial-domain resource, a code-domain resource, or a sensing power.

In an embodiment, the state of the sensing procedure may be a state set for the sensing procedure based on the requirements of the sensing service. For example, if the requirements of the sensing service are different, the states of the sensing procedure may be different, the wireless sensing resources required for different states may be different, or the scheduling priorities may be different.

In an embodiment, the sensing service KPI may be an indicator set based on the requirements of the sensing service.

For example, in case that the sensing service is autonomous driving, the sensing service KPI may be a sensing range of 1 km, a refresh rate of 0.1 s, or a maximum sensing delay of 1500 ms, etc.

For example, in case that the sensing service is security, the sensing service KPI may be a sensing range of 3km, a refresh rate of 0.01s, or a maximum sensing delay of 500 ms, etc.

In an embodiment, the sensing service KPI may be given, or adjusted in real time based on the state of the sensing procedure.

In an embodiment, the state of the sensing procedure and the sensing service KPI may be correlated. For example, a state requiring more wireless sensing resources may correspond to a higher KPI.

In an embodiment, the sensing service KPI may be regarded as the type of the sensing service, and the sensing service KPI may be associated with an identifier of the sensing service type.

In an embodiment, in order to more effectively allocate the wireless sensing resource based on the requirements of the sensing service, the wireless sensing resource used for the sensing service may be determined based on the state of the sensing procedure and/or the sensing service KPI.

Step 510, send or receive a sensing signal or channel based on the wireless sensing resource.

In an embodiment, in case that the base station is a sensing device, after determining the wireless sensing resource, the base station may perform a sensing procedure based on the wireless sensing resource, such as sending or receiving a sensing signal or channel.

For example, the base station may determine that the wireless sensing resource is a time-domain resource, and the base station may perform a sensing procedure within the time-domain resource, such as sending or receiving a sensing signal or channel.

In an embodiment, since different states of the sensing procedure may require different wireless sensing resources, the base station sends or receives sensing signals or channels in different states of the sensing procedure, which may achieve more efficient allocation of wireless sensing resources according to the requirements of the sensing service and save air interface resources.

In an embodiment, the base station may determine the wireless sensing resource for the sensing service based on the configuration of the base station or the configuration of the sensing server. The wireless sensing resource is determined by the base station or the sensing server based on the state of the sensing procedure and/or the sensing service KPI. The base station may then perform the current sensing procedure based on the wireless sensing resource, such as sending or receiving a sensing signal or channel.

The sensing method provided by the embodiment of the present application decomposes the sensing service requirement of an application layer into multiple states. Different sensing procedure states may be allocated different wireless sensing resources and scheduling priorities. The base station sends or receives a sensing signal or channel in different sensing procedure states, which may achieve more efficient allocation of wireless sensing resources according to the requirements of the sensing service and save air interface resources.

In an embodiment, determining the wireless sensing resource for the sensing service includes any of following:
determining the wireless sensing resource based on the state of the sensing procedure and/or the sensing service KPI; or
receiving resource indication information sent from a sensing server, and determining the wireless sensing resource for the sensing service based on the resource indication information, where the resource indication information is generated based on the state of the sensing procedure and/or the sensing service KPI.

In an embodiment, in case that the base station is a node (sensing resource allocation node) for allocating wireless sensing resources for the sensing service, the base station may configure suitable wireless sensing resources for the current sensing service based on the state of the sensing procedure and/or the sensing service KPI; in case that the sensing device is a terminal, the base station sends resource indication information to the terminal, and after receiving the resource indication information, the terminal determines the wireless sensing resource and performs the sensing procedure; in case that the sensing device is a base station, after configuring the suitable wireless sensing resources for the current sensing service, the base station directly performs the sensing procedure within the wireless sensing resources.

In an embodiment, in case that the sensing server is a node (sensing resource allocation node) that allocates wireless sensing resources for the sensing service, the sensing server may generate resource indication information based on the state of the sensing procedure and/or the sensing service KPI, and then the sensing server sends the resource indication information to the terminal and/or the base station; in case that the sensing device is a terminal, after receiving the resource indication information, the terminal determines the wireless sensing resource and performs the sensing procedure; in case that the sensing device is a base station, after receiving the resource indication information, the base station determines the wireless sensing resource and performs the sensing procedure.

In an embodiment, the sensing method further includes:
sending the resource indication information to a terminal, where the resource indication information is used to indicate the wireless sensing resource.

In an embodiment, in case that the base station is a node (sensing resource allocation node) that allocates wireless sensing resources for the sensing service, the base station may configure the suitable wireless sensing resources for the current sensing service based on the state of the sensing procedure and/or the sensing service KPI; in case that the sensing device is a terminal, the base station sends resource indication information to the terminal, and after receiving the resource indication information, the terminal determines the wireless sensing resource and performs the sensing procedure; in case that the sensing device is a base station, after configuring the suitable wireless sensing resources for the current sensing service, the base station directly performs the sensing procedure within the wireless sensing resources.

In an embodiment, in case that the base station is a node (sensing resource allocation node) that allocates wireless sensing resources for the sensing service, the base station may configure suitable wireless sensing resources for the current sensing service based on the state of the sensing procedure and/or the sensing service KPI. The base station may then send resource indication information to the sensing server to allow the sensing server to determine the wireless sensing resources.

In an embodiment, the sensing method further includes:
determining the state of the sensing procedure and/or the sensing service KPI.

In an embodiment, in case that the base station is a node (sensing state management node) that manages the state of the sensing procedure, the base station may determine the state of the sensing procedure and/or the sensing service KPI.

In an embodiment, in case that the base station is a node (sensing state management node) that manages the state of the sensing procedure, the base station may determine the state of the sensing procedure and/or the sensing service KPI, and inform the terminal and/or the sensing server each time the state of the sensing procedure and/or the sensing service KPI is updated.

For example, in case that the base station is a node (sensing state management node) that manages the state of the sensing procedure, the base station may determine that the state of the current sensing procedure is state A at time a and determine that the state of the current sensing procedure is state B at time b.

For example, in case that the base station is a node that manages the state of the sensing procedure (sensing state management node), the base station may determine that the state of the current sensing procedure is state A at time a, and inform the terminal and/or sensing server; and determine that the state of the current sensing procedure is state B at time b after time a, and inform the terminal and/or sensing server.

In an embodiment, after the base station determines the state of the sensing procedure and/or the sensing service KPI, or after the base station informs the sensing server of the state of the sensing procedure and/or the sensing service KPI, the base station and/or the sensing server may allocate more suitable wireless sensing resources for the current state of the sensing service and send them to the sensing device (such as the terminal and/or base station), and the sensing device performs the sensing procedure within the wireless sensing resources.

For example, after the base station determines that the state of the sensing procedure is state D (for example, a state where only coarse sensing is required) and informs the sensing server, the sensing server may allocate more suitable wireless sensing resources for the sensing service based on state D (for example, the wireless sensing resource that may just meet the coarse sensing procedure), and send to the base station. The base station performs the sensing procedure within the wireless sensing resource, which may avoid the sensing server allocating too many wireless sensing resources for the sensing service that only requires coarse sensing, thereby saving resources.

For example, after the base station determines that the state of the sensing procedure is state D (for example, a state where only coarse sensing is required) and informs the sensing server, the sensing server may allocate more suitable wireless sensing resources for the sensing service based on state D (for example, the wireless sensing resource that may just meet the coarse sensing procedure), and send to the terminal. The terminal performs the sensing procedure within the wireless sensing resource, which may avoid the sensing server allocating too many wireless sensing resources for the sensing service that only requires coarse sensing, thereby saving resources.

For example, the base station determines that the state of the sensing procedure is state D (for example, a state where only coarse sensing is required). The base station may allocate more suitable wireless sensing resources for the sensing service based on state D (for example, the wireless sensing resource that may just meet the coarse sensing procedure) and send them to the terminal. The terminal performs the sensing procedure within the wireless sensing resource, which may avoid the base station allocating too many wireless sensing resources for the sensing service that only requires coarse sensing, thereby saving resources.

For example, the base station determines that the state of the sensing procedure is state D (for example, a state where only coarse sensing is required). The base station may allocate more suitable wireless sensing resources for the sensing service based on state D (for example, the wireless sensing resource that may just meet the coarse sensing procedure). The base station performs the sensing procedure within the wireless sensing resource, which may avoid the base station allocating too many wireless sensing resources for the sensing service that only requires coarse sensing, thereby saving resources.

In an embodiment, in case that the base station is a node that manages the state of the sensing procedure, the base station may also determine that the sensing device is a base station, or a terminal, or a base station and a terminal.

In an embodiment, in case that the base station is a node that manages the state of the sensing procedure, the base station may also determine the sensing mode as monostatic sensing and/or bistatic sensing.

In an embodiment, in case that the terminal and/or the sensing server is a node (sensing state management node) that manages the state of the sensing procedure, after the terminal and/or the sensing server determines the state of the sensing procedure and/or the sensing service KPI, the state of the sensing procedure and/or the sensing service KPI may be sent to the base station, such as by informing the base station through the state update information of the sensing procedure or the state management information of the sensing procedure. The base station may then obtain the state of the sensing procedure and/or the sensing service KPI.

In an embodiment, determining the state of the sensing procedure and/or the sensing service KPI includes:
determining the state of the sensing procedure and/or the sensing service KPI based on state management information; or
receiving state update information of the sensing procedure sent from a sensing server or a terminal, and determining an updated state of the sensing procedure and/or an updated sensing service KPI based on the state update information of the sensing procedure, where the state update information of the sensing procedure is generated based on an obtained sensing result; or
updating the state of the sensing procedure and/or the sensing service KPI based on a historical sensing result or data in the sensing procedure.

In an embodiment, the state management information may be relevant information used to determine the state of the sensing procedure and/or the sensing service KPI.

In an embodiment, the state management information may be obtained by the base station itself, or sent to the base station after being determined by the terminal and/or the sensing server.

In an embodiment, the base station may determine the state of the sensing procedure and/or the sensing service KPI based on state management information.

In an embodiment, in case that the base station is a node (sensing state management node) that manages the state of the sensing procedure, the base station may determine the state of the sensing procedure and/or the sensing service KPI based the state management information.

In an embodiment, the historical sensing result or the data obtained may be the historical sensing result or data obtained after the sensing device sends or receives one or more sensing signals/channels.

In an embodiment, in case that the terminal is a node (sensing state management node) that manages the state of the sensing procedure and the base station is a sensing device, the terminal may receive the sensing result or data sent from the base station, update the state of the sensing procedure and/or the sensing service KPI based on the historical sensing result or data, generate state update information of the sensing procedure, and send the state update information of the sensing procedure to the base station and/or the sensing server to indicate/inform the base station and/or the sensing server of the updated state of the sensing procedure and/or the updated sensing service KPI.

In an embodiment, in case that the sensing server is a node (sensing state management node) that manages the state of the sensing procedure and the terminal is a sensing device, the sensing server may receive the sensing result or data sent from the terminal, update the state of the sensing procedure and/or the sensing service KPI based on the historical sensing result or data, generate state update information of the sensing procedure, and send the state update information of the sensing procedure to the terminal and/or base station to indicate/inform the terminal and/or base station of the updated state of the sensing procedure and/or the updated sensing service KPI.

In an embodiment, in case that the sensing server is a node (sensing state management node) that manages the state of the sensing procedure and the base station is a sensing device, the sensing server may receive the sensing result or data sent from the base station update the state of the sensing procedure and/or the sensing service KPI based on the historical sensing result or data, generate state update information of the sensing procedure, and send the state update information of the sensing procedure to the terminal and/or base station to indicate/inform the terminal and/or base station of the updated state of the sensing procedure and/or the updated sensing service KPI.

In an embodiment, in case that the terminal is a node (sensing state management node) that manages the state of the sensing procedure and a sensing device, the terminal may update the state of the sensing procedure and/or the sensing service KPI based on the historical sensing result or data obtained after sending or receiving one or more sensing signals/channels, generate state update information of the sensing procedure, and send the state update information of the sensing procedure to the base station and/or the sensing server to indicate/inform the base station and/or the sensing server of the updated state of the sensing procedure and/or the sensing service KPI.

In an embodiment, the terminal and/or the sensing server may send the state update information of the sensing procedure through an independent signaling, or send he state update information of the sensing procedure together with other messages.

In an embodiment, the terminal and/or the sensing server may periodically send state update information of the sensing procedure, or dynamically send state update information of the sensing procedure.

In an embodiment, the base station is a node (sensing state management node) that manages the state of the sensing procedure and the terminal is a sensing device, the terminal may receive the sensing result or data sent from the terminal and determine the updated state and/or updated sensing service KPI.

In an embodiment, in case that the base station is a node (sensing state management node) that manages the state of the sensing procedure and the base station is a sensing device, the base station may directly determine the updated state and/or the updated sensing service KPI based on the sensing result or data obtained during the sensing procedure.

In an embodiment, the base station is a node (sensing state management node) that manages the state of the sensing procedure and both the base station and the terminal are sensing devices, the base station may receive the sensing result or data sent from the terminal, and determine the updated state and/or the updated sensing service KPI in combination with the sensing result or data obtained by the base station.

For example, a sensing service is shared by two base stations. At the early warning screening stage, both base stations perform the sensing procedure. However, due to the mobility of the sensed object, the early warning confirmation state only needs to be completed by base station P. At this time, the sensing service of the other base station Q is in an idle state. After a certain period of time, if the sensed object moves into the coverage range of base station Q again, base station Q may determine that the state of the sensing procedure is updated to target tracking or early warning confirmation state.

In an embodiment, in case that the sensing state changes (or in case that the sub-procedure changes), such as from early screening warning to early screening confirmation, the sensing behavior of the sensing device is not "starting again", but uses the historical sensing result or data obtained (such as some sensing results or data obtained in the early screening warning state) to quickly perform warning confirmation, that is, the sensing device performs the next step of sensing based on the historical result of the early screening warning, which may speed up the sensing procedure and improve sensing accuracy and reliability.

In an embodiment, the sensing method further includes:
triggering the sensing service and determining state management information; or
receiving state management information sent from a sensing server or a terminal.

In an embodiment, in case that the base station is a node (sensing state management node) that manages the state of the sensing procedure, the base station may trigger the sensing service and determine the state management information according to the sensing request initiated by the application.

In an embodiment, after triggering the sensing service, the base station may directly determine the state of the sensing procedure and/or the sensing service KPI based on the state management information.

In an embodiment, after determining the state management information, the base station may send the state management information to the terminal and/or the sensing server, and the terminal and/or the sensing server may determine the state of the sensing procedure and/or the sensing service KPI based on the state management information.

In an embodiment, after the terminal and/or the sensing server determines the state of the sensing procedure and/or the sensing service KPI based on the state management information, the terminal and/or the sensing server may determine the wireless sensing resource based on the state of the sensing procedure and/or the sensing service KPI. The sensing device may perform the sensing procedure within the wireless sensing resource, such as receiving or sending a sensing signal or channel.

In an embodiment, in case that the sensing server is a node (sensing state management node) that manages the state of the sensing procedure, the sensing server may trigger the sensing service based on the sensing request initiated by the application, and determine the state management information, further determine the state of the sensing procedure and/or the sensing service KPI based on the state management information, and inform the base station and/or terminal.

In an embodiment, the sensing server may trigger the sensing service based on the sensing request initiated by the application, and determine the state management information, and further send the state management information to the base station and/or terminal. The base station and/or terminal determines the state of the sensing procedure and/or the sensing service KPI based on the state management information.

In an embodiment, the sensing method further includes:
sending the state management information to the sensing server or the terminal.

In an embodiment, the base station may trigger the sensing service and determine the state management information based on the sensing request initiated by the application.

In an embodiment, after determining the state management information, the base station may send the state management information to the terminal and/or the sensing server for determining the state of the sensing procedure and/or the sensing service KPI.

In an embodiment, after the base station determines the state management information, in case that the sensing server is a node (sensing resource allocation node) that allocates wireless sensing resources for the sensing service, the state management information may be sent to the sensing server. After receiving the state management information, the sensing server may determine the state of the sensing procedure and/or the sensing service KPI based on the state management information, and further allocate suitable wireless sensing resources for the current sensing procedure. The sensing device may receive or send a sensing signal or channel within the wireless sensing resource.

In an embodiment, the sensing device may receive resource indication information sent from the sensing server and determine the wireless sensing resource based on the resource indication information. The sensing device may then perform a sensing procedure based on the wireless sensing resource, such as sending or receiving a sensing signal or channel.

In an embodiment, after the base station determines the state management information, in case that the base station is a node (sensing resource allocation node) that allocates wireless sensing resources for the sensing service, the base station may directly determine the state of the sensing procedure and/or the sensing service KPI based on the state management information, and further allocate suitable wireless sensing resources for the current sensing procedure so that the terminal may receive or send sensing signals or channels within the wireless sensing resources; or the base station may receive or send sensing signals or channels within the wireless sensing resources.

In an embodiment, the sensing method further includes:
sending the state update information of the sensing procedure to the sensing server or the terminal, where the state update information of the sensing procedure is used to indicate the updated state of the sensing procedure and/or the updated sensing service KPI.

In an embodiment, in case that the base station is a node (sensing state management node) that manages the state of the sensing procedure, the base station may determine an updated state and/or an updated sensing service KPI based on the obtained historical sensing result or data.

For example, in case that the sensing device is a terminal, the sensing result or data sent from the terminal may be received to determine the updated state and/or the updated sensing service KPI.

For example, in case that the sensing device is a base station, the base station may directly determine an updated state and/or an updated sensing service KPI based on sensing result or data obtained through sensing.

In an embodiment, after the base station determines the updated state and/or sensing service KPI, the state update information of the sensing procedure based on the updated state and/or the updated sensing service KPI may be generated, and then the state update information of the sensing procedure may be sent to the node (sensing resource allocation node) that allocates wireless sensing resources for the sensing service, such as a sensing server or base station.

In an embodiment, in case that the base station is a node (sensing resource allocation node) that allocates wireless sensing resources for the sensing service, the base station may directly determine the updated state and/or the updated sensing service KPI based on the state update information of the sensing procedure.

In an embodiment, in case that the terminal is a sensing device, after the base station determines the updated state and/or the updated sensing service KPI, the resource indication information may be generated based on the updated state and/or the updated sensing service KPI, and then the resource indication information may be sent to the terminal.

In an embodiment, the terminal may receive resource indication information sent from the base station, and determine updated wireless sensing resource based on the resource indication information, and then perform a sensing procedure based on the updated wireless sensing resource, such as sending or receiving a sensing signal or channel.

In an embodiment, in case that the base station is a sensing device, after determining the updated state and/or the updated sensing service KPI, the base station may directly determine the updated wireless sensing resource based on the updated state and/or sensing service KPI, and then the base station may perform the sensing procedure based on the updated wireless sensing resource, such as sending or receiving a sensing signal or channel.

In an embodiment, in case that the sensing server is a node (sensing resource allocation node) that allocates wireless sensing resources for the sensing service, the sensing server may receive state update information of the sensing procedure sent from the base station, and determine the updated state and/or the updated sensing service KPI based on the state update information of the sensing procedure.

In an embodiment, in case that the terminal is a sensing device, after the sensing server determines the updated state and/or the updated service KPI, the resource indication information may be generated based on the updated state and/or the updated sensing service KPI, and then the resource indication information may be sent to the terminal.

In an embodiment, the terminal may receive resource indication information sent from the sensing server, determine updated wireless sensing resource based on the resource indication information, and then perform a sensing procedure based on the updated wireless sensing resource, such as sending or receiving a sensing signal or channel.

In an embodiment, in case that the base station is a sensing device, after the sensing server determines the updated state and/or the updated service KPI, the resource indication information may be generated based on the updated state and/or the updated service KPI, and then the resource indication information may be sent to the base station.

In an embodiment, the base station may receive resource indication information sent from the sensing server, and determine updated wireless sensing resource based on the resource indication information, and then perform a sensing procedure based on the updated wireless sensing resource, such as sending or receiving a sensing signal or channel.

In an embodiment, the state of the sensing procedure includes one or more of following:
a first state, a second state, a third state, or a fourth state;
the state of the sensing procedure meets one or more of following:
   a KPI of a sensing service in the first state is lower than a given KPI threshold of the sensing service;
   a KPI of a sensing service in the fourth state is lower than a given KPI threshold of the sensing service;
   a KPI of a sensing service in the first state is lower than a KPI of a sensing service in the second state;
   a KPI of a sensing service in the first state is lower than a KPI of a sensing service in the third state;
   a KPI of a sensing service in the fourth state is lower than a KPI of a sensing service in the second state;
   a KPI of a sensing service in the fourth state is lower than a KPI of a sensing service in the third state;
   a KPI of a sensing service in the second state is higher than or equal to a given KPI threshold of the sensing service; or
   a KPI of a sensing service in the third state is higher than or equal to a given KPI threshold of the sensing service.

In an embodiment, the state of the sensing procedure may include any of following:
1. the first state;
2. the second state;
3. the third state;
4. the fourth state;
5. the first state and the second state;
6. the first state and the third state;
7. the first state and the fourth state;
8. the second state and the third state;
9. the second state and the fourth state;
10. the third state and the fourth state;
11. the first state, the second state and the third state;
12. the first state, the second state and the fourth state;
13. the first state, the third state and the fourth state;
14. the second state, the third state and the fourth state; or
15. the first state, the second state, the third state, and the fourth state.

In an embodiment, the given KPI threshold of the sensing service may be a KPI requirement of the sensing service itself. For example, in case that the sensing service is autonomous driving, the maximum sensing delay requirement is 1500 ms; in case that the sensing service is security, the maximum sensing delay requirement is 500 ms.

In an embodiment, the first state may be an "early warning screening" state, which may be the first state of the sensing procedure. The KPI requirement of the sensing service in the first state may be lower than the given KPI threshold of the sensing service, and the wireless sensing resources required to be allocated to the sensing service in the first state may be less than the given wireless sensing resource threshold of the sensing service.

In an embodiment, the second state may be a "warning confirmation" state, in which the KPI requirement of the sensing service may be greater than or equal to the given KPI threshold of the sensing service, and the wireless sensing resources required to be allocated to the sensing service in the second state may be greater than or equal to the given wireless sensing resource threshold of the sensing service.

In an embodiment, the third state may be a "target tracking" state, in which the KPI requirement of the sensing service may be greater than or equal to the given KPI threshold of the sensing service, and the wireless sensing resources required to be allocated to the sensing service in the third state may be greater than or equal to the given wireless sensing resource threshold of the sensing service.

In an embodiment, the fourth state may be an "idle" state, which is a temporary state in the sensing procedure, indicating that the sensing node does not need to perform the sensing procedure, or the KPI requirement of the sensing service in the fourth state is lower than the given KPI threshold of the sensing service, and the wireless sensing resources that need to be allocated to the sensing service in the fourth state may be less than the given wireless sensing resource threshold of the sensing service.

In an embodiment, the KPI requirement of the sensing service in the first state may be lower than the KPI requirement of the sensing service in the second state, and the wireless sensing resources required to be allocated to the sensing service in the first state are less than the wireless sensing resources required to be allocated to the sensing service in the second state.

In an embodiment, the KPI requirement of the sensing service in the first state may be lower than the KPI requirement of the sensing service in the third state, and the wireless sensing resource required to be allocated to the sensing service in the first state are less than the wireless sensing resource required to be allocated to the sensing service in the third state.

In an embodiment, the KPI requirement of the sensing service in the fourth state may be lower than the KPI requirement of the sensing service in the second state, and the wireless sensing resources required to be allocated to the sensing service in the fourth state are less than the wireless sensing resources required to be allocated to the sensing service in the second state.

In an embodiment, the KPI requirement of the sensing service in the fourth state may be lower than the KPI requirement of the sensing service in the third state, and the wireless sensing resources required to be allocated to the sensing service in the fourth state are less than the wireless sensing resources required to be allocated to the sensing service in the second state.

In an embodiment, in case that the sensing device in the first state initially senses the target, the sensing device may switch to the second state to obtain more accurate sensing results. Accordingly, the first state is called the "early warning screening" state, and the state characteristics are: lower sensing KPI requirements, fewer allocated wireless resources, and lower priority.

In an embodiment, in case that the sensing device in the second state accurately senses the target, the sensing device switch the third state or the fourth state based on the indication of the node that manages the state of the sensing procedure. Correspondingly, the second state is called the "early warning confirmation" state, and the state characteristics are: higher sensing KPI requirements, more allocated wireless resources, and higher priority.

In an embodiment, the sensing device in the third state may use historical sensing data or sensing results to require fewer wireless sensing resources. Accordingly, the third state is called the "target tracking" state; the state characteristics are: high sensing KPI requirements, fewer allocated wireless resources, and moderate priority.

In an embodiment, the sensing device in the third state may periodically report the target tracking results and continue the third state or switch to other states based on the indication of the node that manages the state of the sensing procedure.

In an embodiment, the sensing device in the fourth state may stop performing the sensing procedure, or perform a sensing procedure that requires very few wireless sensing resources, and continue the fourth state or switch to other states according to the indication of the node that manages the state of the sensing procedure. Accordingly, the fourth state is called the "idle state"; the state characteristics are: least allocated wireless resources (such as: no sensing resources), and lowest priority.

In an embodiment, the fourth state and other states may switch bidirectionally, for example, the fourth state may switch to the first state, or from the first state to the fourth state.

For example, two base stations share a sensing task. In the first state, both base stations perform sensing. However, due to the mobility of the sensed object, only one base station is required to complete the second state, and the other base station may be in the fourth state. Furthermore, after a certain period of time, if the sensed object moves to the base station in the fourth state, the base station directly enters the third state or the second state.

In an embodiment, the state of the sensing service is invisible to the base station or terminal. The sensing server and the base station and/or terminal adopt an interactive sensing method, that is, the base station and/or terminal performs one sensing, sends the sensing result to the sensing server, and the sensing server updates the sensing parameters and the base station and/or terminal performs another sensing. In this way, in fact, a sensing service is divided into multiple sub-procedures. In case that the state of the sensing procedure changes, such as from the first state to the second state, the sensing behavior of the sensing device does not start from the beginning, but uses some sensing results or data of the first state to quickly proceed to the second state. That is, the sensing device performs the next step of sensing based on the historical results of the first state, which may speed up the sensing procedure and improve sensing accuracy and reliability.

In an embodiment, in case that the sensing device and the node managing the state of the sensing procedure are not the same device, indication information is required to indicate the correlation between the two different states. The indication information may be the same service identifier (ID) or other indication information.

In an embodiment, the state management information of the sensing procedure includes one or more of following:
one or more states included in the sensing procedure;
an initial state of the sensing procedure;
a KPI of the sensing procedure;
a service type identifier of the sensing service;
an identifier of a node that manages the state of the sensing procedure;
an identifier of a node that allocates the wireless sensing resource for the sensing service.

In an embodiment, the state included in the sensing procedure may be the state of the sensing procedure included in the sensing service, such as one or more of the first state, the second state, the third state, or the fourth state.

In an embodiment, the initial state of the sensing procedure may be a state selected from the states included in the sensing procedure, which is the most suitable state to be used as the initial state of the sensing service, such as the first state.

For example, taking autonomous driving as an example of a sensing service, considering that it only makes sense for the base station to send a sensing signal in case that a vehicle passes through the sensing area and a vehicle requests sensing, it is more reasonable for the initial state of the sensing service to be in the fourth state before the vehicle requests.

In an embodiment, the KPI of the sensing service may be an indicator set based on the requirements of the sensing service.

For example, in case that the sensing service is autonomous driving, the sensing service KPI may be a sensing range of 1 km, a refresh rate of 0.1 s, or a maximum sensing delay of 1500 ms, etc.

For example, in case that the sensing service is security, the sensing service KPI may be a sensing range of 3km, a refresh rate of 0.01s, or a maximum sensing delay of 500 ms, etc.

In an embodiment, the service type identifier of the sensing service may be an identifier corresponding to the service type of the sensing service. The service type of the sensing service may be determined based on the identifier. and the sensing service KPI corresponding to the service type may be determined.

In an embodiment, the identifier of the node that manages the state of the sensing procedure may be the identifier corresponding to the node that manages the state of the sensing procedure. Based on the identifier, it may be determined that the node that manages the state of the sensing procedure is a terminal, a base station, or a sensing server.

In an embodiment, the identifier of the node that allocates wireless sensing resources for the sensing service may be the identifier corresponding to the node that allocates the wireless sensing resources for the sensing service. Based on the identifier, it may be determined that the node that allocates wireless sensing resources for the sensing service is a terminal, a base station, or a sensing server.

In an embodiment, in case that the base station is a node (sensing state management node) that manages the state of the sensing procedure, the base station may trigger the sensing service and determine one or more of following: the state included in the sensing procedure, the initial state of the sensing procedure, the KPI of the sensing service, the service type identifier of the sensing service, the identifier of the node that manages the state of the sensing procedure, and the identifier of the node that allocates wireless sensing resources for the sensing service.

In an embodiment, the base station may send the state management information to the terminal or the sensing server for determining the state of the sensing procedure and/or the sensing service KPI.

In an embodiment, the base station may receive one or more of the following sent from the terminal or the sensing server: the state included in the sensing procedure, the initial state of the sensing procedure, the KPI of the sensing service, the service type identifier of the sensing service, the identifier of the node that manages the state of the sensing procedure, or the identifier of the node that allocates wireless sensing resources for the sensing service, and determine the state of the sensing procedure and/or the KPI of the sensing service.

FIG. 6 is a third schematic flowchart of a sensing method provided by an embodiment of the present application. As shown in FIG. 6, the embodiment of the present application provides a sensing method, the execution body of which may be a sensing server. The method includes the following steps.

Step 600, send state management information and/or resource indication information of a sensing procedure to a base station or a terminal, where the state management information is used to indicate a state of the sensing procedure and/or a sensing service key performance indicator (KPI), and the resource indication information is used to indicate a wireless sensing resource used for the sensing service, and the wireless sensing resource is associated with the state of the sensing procedure and/or the sensing service KPI.

In an embodiment, in case that the sensing server is a node (sensing state management node) that manages the state of the sensing procedure, the sensing server may trigger the sensing service based on the sensing request initiated by the application, and determine the state management information, further determine the state of the sensing procedure and/or the sensing service KPI based on the state management information, and inform the base station and/or terminal.

In an embodiment, the sensing server may trigger the sensing service based on the sensing request initiated by the application, and determine the state management information, and further send the state management information to the base station and/or terminal. The base station and/or terminal determines the state of the sensing procedure and/or the sensing service KPI based on the state management information.

In an embodiment, in case that the base station is a node (sensing resource allocation node) that allocates wireless sensing resources for the sensing service, the base station may receive state management information sent from the sensing server and determine the state of the sensing procedure and/or the sensing service KPI based on the state management information.

In an embodiment, in case that the sensing server is a node (sensing resource allocation node) that allocates wireless sensing resources for the sensing service, the sensing server may generate resource indication information based on the state of the sensing procedure and/or the sensing service KPI, and then the sensing server may send the resource indication information to the terminal and/or the base station; in case that the sensing device is a terminal, after receiving the resource indication information, the terminal determines the wireless sensing resource and performs the sensing procedure; in case that the sensing device is a base station, after receiving the resource indication information, the base station determines the wireless sensing resource and performs the sensing procedure.

The sensing method provided by the embodiment of the present application decomposes the sensing service requirement of an application layer into multiple states. Different sensing procedure states may be allocated different wireless sensing resources and scheduling priorities. The sensing server allocates different wireless sensing resources to the sensing device in different states of the sensing procedure, which may achieve more effective allocation of wireless sensing resources based on the requirements of the sensing service and save air interface resources.

In an embodiment, the sensing method further includes:
determining the state of the sensing procedure and/or the sensing service KPI.

In an embodiment, in case that the sensing server is a node (sensing state management node) that manages the state of the sensing procedure, the sensing procedure may determine the state of the sensing procedure and/or the sensing service KPI.

In an embodiment, in case that the sensing server is a node (sensing state management node) that manages the state of the sensing procedure, the sensing server may determine the state of the sensing procedure and/or the sensing service KPI, and inform the base station and/or terminal each time the state of the sensing procedure and/or the sensing service KPI is updated.

For example, in case that the sensing server is a node (sensing state management node) that manages the state of the sensing procedure, the terminal may determine that the state of the current sensing procedure is state A at time a and determine that the state of the current sensing procedure is state B at time b.

For example, in case that the sensing server is a node (sensing state management node) that manages the state of the sensing procedure, the sensing server may determine that the state of the current sensing procedure is state A at time a and inform the base station and/or terminal, and determine that the state of the current sensing procedure is state B at time b after time a, and inform the base station and/or terminal.

In an embodiment, after the sensing server determines the state of the sensing procedure and/or the sensing service KPI, or after the sensing server informs the base station and/or terminal of the state of the sensing procedure and/or the sensing service KPI, the base station and/or the sensing server may allocate more suitable wireless sensing resources for the current state of the sensing service and send wireless sensing resources to the sensing device (such as the terminal and/or base station), and the sensing device performs the sensing procedure within the wireless sensing resources.

For example, after the sensing server determines that the state of the sensing procedure is state C (for example, a state where only coarse sensing is required) and informs the base station, the base station may allocate more suitable wireless sensing resources for the sensing service based on state C (for example, wireless sensing resources that may just meet the coarse sensing procedure) and send the wireless sensing resources to the terminal. The terminal performs the sensing procedure within the wireless sensing resources, which may avoid the base station allocating too many wireless sensing resources for the sensing service that only requires coarse sensing, thereby saving resources.

For example, after the sensing server determines that the state of the sensing procedure is state C (for example, a state where only coarse sensing is required) and informs the base station, the base station may allocate more suitable wireless sensing resources for the sensing service based on state C (for example, wireless sensing resources that may just meet the coarse sensing procedure). The base station performs the sensing procedure within the wireless sensing resources, which may avoid the base station allocating too many wireless sensing resources for the sensing service that only requires coarse sensing, thereby saving resources.

For example, the sensing server determines that the state of the sensing procedure is state C (for example, a state where only coarse sensing is required). The sensing server may allocate more suitable wireless sensing resources (for example, wireless sensing resources that may just meet the coarse sensing procedure) for the sensing service based on state C, and send the wireless sensing resources to the terminal. The terminal performs the sensing procedure within the wireless sensing resources, which may avoid the sensing server allocating too many wireless sensing resources for the sensing service that only requires coarse sensing, thereby saving resources.

For example, the sensing server determines that the state of the sensing procedure is state C (for example, a state where only coarse sensing is required). The sensing server may allocate more suitable wireless sensing resources (for example, wireless sensing resources that may just meet the coarse sensing procedure) for the sensing service based on state C, and send the wireless sensing resources to the base station. The base station performs the sensing procedure within the wireless sensing resources, which may avoid the sensing server allocating too many wireless sensing resources for the sensing service that only requires coarse sensing, thereby saving resources.

In an embodiment, in case that the sensing server is a node that manages the state of the sensing procedure, the sensing server may also determine that the sensing device is a base station, or a terminal, or a base station and a terminal.

In an embodiment, in case that the sensing server is a node that manages the state of the sensing procedure, the sensing server may also determine the sensing mode as monostatic sensing and/or bistatic sensing.

In an embodiment, in case that the base station and/or the terminal is a node (sensing state management node) for managing the state of the sensing procedure, after the base station and/or the terminal determines the state of the sensing procedure and/or the sensing service KPI, the state of the sensing procedure and/or the sensing service KPI may be sent to the sensing server, such as by informing the sensing server through the state update information of the sensing procedure or the state management information of the sensing procedure. The sensing server may then obtain the state of the sensing procedure and/or the sensing service KPI.

In an embodiment, the sensing method further includes:
determining the wireless sensing resource used for the sensing service based on the state of the sensing procedure and/or the sensing service KPI; or

In an embodiment, in case that the sensing server is a node (sensing resource allocation node) that allocates wireless sensing resources for the sensing service, the sensing server may configure suitable wireless sensing resources for the current sensing service based on the state of the sensing procedure and/or the sensing service KPI; in case that the sensing device is a terminal, the sensing server sends resource indication information to the terminal. After receiving the resource indication information, the terminal determines the wireless sensing resources and performs the sensing procedure; in case that the sensing device is a base station, the sensing server sends resource indication information to the base station. After receiving the resource indication information, the base station determines the wireless sensing resources and performs the sensing procedure.

In an embodiment, the sensing server may determine different wireless sensing resources for different states of the sensing procedure and/or sensing service KPIs.

In an embodiment, determining the state of the sensing procedure and/or the sensing service KPI includes:
determining the state of the sensing procedure and/or the sensing service KPI based on state management information; or
receiving state update information of the sensing procedure sent from a terminal or a base station, and determining an updated state of the sensing procedure and/or an updated sensing service KPI based on the state update information of the sensing procedure, where the state update information of the sensing procedure is generated based on an obtained sensing result; or
updating the state of the sensing procedure and/or the sensing service KPI based on a historical sensing result or data in the sensing procedure.

In an embodiment, the state management information may be relevant information used to determine the state of the sensing procedure and/or the sensing service KPI.

In an embodiment, the state management information may be obtained by the sensing server itself, or sent to the sensing server after being determined by the base station and/or the terminal.

In an embodiment, the sensing server may determine the state of the sensing procedure and/or the sensing service KPI based on the state management information.

In an embodiment, in case that the sensing server is a node (sensing state management node) that manages the state of the sensing procedure, the sensing server may determine the state of the sensing procedure and/or the sensing service KPI based on the state management information.

In an embodiment, the historical sensing result or the data obtained may be the historical sensing result or data obtained after the sensing device sends or receives one or more sensing signals/channels.

In an embodiment, in case that the base station is a node (sensing state management node) that manages the state of the sensing procedure and the terminal is a sensing device, the base station may receive the sensing result or data sent from the terminal, update the state of the sensing procedure and/or the sensing service KPI based on the historical sensing result or data, generate state update information of the sensing procedure, and send the state update information of the sensing procedure to the terminal and/or the sensing server to indicate/inform the terminal and/or the sensing server of the updated state of the sensing procedure and/or the sensing service KPI.

In an embodiment, in case that the base station is a node (sensing state management node) and a sensing device for managing the state of the sensing procedure, the base station may update the state of the sensing procedure and/or the sensing service KPI based on the historical sensing result or data obtained after sending or receiving one or more sensing signals/channels, generate state update information of the sensing procedure, and send the state update information to the terminal and/or the sensing server, to indicate/inform the terminal and/or the sensing server of the updated state of the sensing procedure and/or the updated sensing service KPI.

In an embodiment, in case that the terminal is a node (sensing state management node) that manages the state of the sensing procedure and the base station is a sensing device, the terminal may receive the sensing result or data sent from the base station, update the state of the sensing procedure and/or the sensing service KPI based on the historical sensing result or data, generate state update information of the sensing procedure, and send the state update information to the sensing server and/or base station to indicate/inform the sensing server and/or base station of the updated state of the sensing procedure and/or sensing service KPI.

In an embodiment, in case that the terminal is a node (sensing state management node) and a sensing device for managing the state of the sensing procedure, the terminal may update the state of the sensing procedure and/or the sensing service KPI based on the historical sensing result or data obtained after sending or receiving one or more sensing signals/channels, generate state update information of the sensing procedure, and send the state update information to the base station and/or the sensing server to indicate/inform the base station and/or the sensing server of the updated state of the sensing procedure and/or the updated sensing service KPI.

In an embodiment, the base station and/or the terminal may send the state update information of the sensing procedure through an independent signaling, or send the state update information together with other messages.

In an embodiment, the base station and/or the terminal may periodically send state update information of the sensing procedure, or dynamically send state update information of the sensing procedure.

In an embodiment, in case that the sensing server is a node (sensing state management node) that manages the state of the sensing procedure and the base station is a sensing device, the sensing server may receive the sensing result or data sent from the base station and determine the updated state and/or the updated service KPI.

In an embodiment, in case that the sensing server is a node (sensing state management node) that manages the state of the sensing procedure and the terminal is a sensing device, the sensing server may receive the sensing result or data sent from the terminal and determine the updated state and/or the updated sensing service KPI.

In an embodiment, in case that the sensing server is a node (sensing state management node) that manages the state of the sensing procedure and both the base station and the terminal are sensing devices, the sensing server may receive the sensing result or data sent from the base station and determine the updated state and/or the updated sensing service KPI.

For example, a sensing service is shared by two base stations. At the early warning screening stage, both base stations perform the sensing procedure. However, due to the mobility of the sensed object, the early warning confirmation state only needs to be completed by base station P. At this time, the sensing service of the other base station Q is in an idle state. After a certain period of time, if the sensed object moves into the coverage range of base station Q again, base station Q may determine that the state of the sensing procedure is updated to target tracking or early warning confirmation state.

In an embodiment, in case that the sensing state changes (or in case that the sub-procedure changes), such as from early screening warning to early screening confirmation, the sensing behavior of the sensing device is not "starting again", but uses the historical sensing result or data obtained (such as some sensing results or data obtained in the early screening warning state) to quickly perform warning confirmation, that is, the sensing device performs the next step of sensing based on the historical result of the early screening warning, which may speed up the sensing procedure and improve sensing accuracy and reliability.

In an embodiment, the sensing method further includes:
triggering the sensing service and determining state management information; or
receiving state management information sent from a base station or a terminal.

In an embodiment, in case that the sensing server is a node (sensing state management node) that manages the state of the sensing procedure, the sensing server may trigger the sensing service and determine the state management information according to the sensing request initiated by the application.

In an embodiment, after determining the state management information, the sensing server may directly determine the state of the sensing procedure and/or the sensing service KPI based on the state management information.

In an embodiment, after determining the state management information, the sensing server may send the state management information to the base station and/or the terminal, and the base station and/or the terminal may determine the state of the sensing procedure and/or the sensing service KPI based on the state management information.

In an embodiment, after the base station and/or terminal determines the state of the sensing procedure and/or the sensing service KPI based on the state management information, the base station and/or the terminal may determine the wireless sensing resources based on the state of the sensing procedure and/or the sensing service KPI. The sensing device may perform the sensing procedure within the wireless sensing resources, such as receiving or sending sensing signals or channels.

In an embodiment, in case that the base station is a node (sensing state management node) that manages the state of the sensing procedure, the base station may trigger the sensing service based on the sensing request initiated by the application, and determine the state management information, further determine the state of the sensing procedure and/or the sensing service KPI based on the state management information, and inform the sensing server and/or terminal.

In an embodiment, the base station may trigger the sensing service based on the sensing request initiated by the application, and determine the state management information, and further send the state management information to the sensing server and/or terminal. The sensing server and/or terminal determines the state of the sensing procedure and/or the sensing service KPI based on the state management information.

In an embodiment, in case that the terminal is a node (sensing state management node) that manages the state of the sensing procedure, the terminal may trigger the sensing service based on the sensing request initiated by the application, determine the state management information, further determine the state of the sensing procedure and/or the sensing service KPI based on the state management information, and inform the sensing server and/or base station.

In an embodiment, the terminal may trigger the sensing service based on the sensing request initiated by the application, determine the state management information, and further send the state management information to the sensing server and/or base station. The sensing server and/or base station determines the state of the sensing procedure and/or the sensing service KPI based on the state management information.

In an embodiment, the sensing method further includes:
sending the state update information of the sensing procedure to the base station or the terminal, where the state update information of the sensing procedure is used to indicate the updated state of the sensing procedure and/or the updated sensing service KPI.

In an embodiment, the sensing server may trigger the sensing service and determine the state management information according to the sensing request initiated by the application.

In an embodiment, after the sensing server determines the state management information, in case that the base station is a node (sensing resource allocation node) that allocates wireless sensing resources for the sensing service, the state management information may be sent to the base station. After receiving the state management information, the base station may determine the state of the sensing procedure and/or the sensing service KPI based on the state management information, and further allocate suitable wireless sensing resources for the current sensing procedure so that the sensing device may receive or send a sensing signal or channel within the wireless sensing resource.

In an embodiment, the sensing device may receive resource indication information sent from the base station and determine wireless sensing resources based on the resource indication information. The sensing device may then perform a sensing procedure based on the wireless sensing resources, such as sending or receiving a sensing signal or channel.

In an embodiment, after the sensing server determines the state management information, in case that the sensing server is a node (sensing resource allocation node) that allocates wireless sensing resources for the sensing service, the sensing server may determine the state of the sensing procedure and/or the sensing service KPI based on the state management information, and further allocate suitable wireless sensing resources for the current sensing procedure so that the sensing device may receive or send sensing signals or channels within the wireless sensing resources.

In an embodiment, the sensing device may receive resource indication information sent from the sensing server and determine the wireless sensing resource based on the resource indication information. The sensing device may then perform a sensing procedure based on the wireless sensing resource, such as sending or receiving a sensing signal or channel.

In an embodiment, the sensing method further includes:
receiving resource indication information sent from a base station, and determining the wireless sensing resource used for the sensing service based on the resource indication information, where the resource indication information is generated based on the state of the sensing procedure and/or the sensing service KPI.

In an embodiment, the sensing server may receive resource indication information sent from the base station, and determine the wireless sensing resource based on the resource indication information.

In an embodiment, the state of the sensing procedure includes one or more of following:
a first state, a second state, a third state, or a fourth state;
the state of the sensing procedure meets one or more of following:
   a KPI of a sensing service in the first state is lower than a given KPI threshold of the sensing service;
   a KPI of a sensing service in the fourth state is lower than a given KPI threshold of the sensing service;
   a KPI of a sensing service in the first state is lower than a KPI of a sensing service in the second state;
   a KPI of a sensing service in the first state is lower than a KPI of a sensing service in the third state;
   a KPI of a sensing service in the fourth state is lower than a KPI of a sensing service in the second state;
   a KPI of a sensing service in the fourth state is lower than a KPI of a sensing service in the third state;
   a KPI of a sensing service in the second state is higher than or equal to a given KPI threshold of the sensing service; or
   a KPI of a sensing service in the third state is higher than or equal to a given KPI threshold of the sensing service.

In an embodiment, the state of the sensing procedure may include any of following:
1. the first state;
2. the second state;
3. the third state;
4. the fourth state;
5. the first state and the second state;
6. the first state and the third state;
7. the first state and the fourth state;
8. the second state and the third state;
9. the second state and the fourth state;
10. the third state and the fourth state;
11. the first state, the second state and the third state;
12. the first state, the second state and the fourth state;
13. the first state, the third state and the fourth state;
14. the second state, the third state and the fourth state; or
15. the first state, the second state, the third state, and the fourth state.

In an embodiment, the given KPI threshold of the sensing service may be a KPI requirement of the sensing service itself. For example, in case that the sensing service is autonomous driving, the maximum sensing delay requirement is 1500 ms; in case that the sensing service is security, the maximum sensing delay requirement is 500 ms.

In an embodiment, the first state may be an "early warning screening" state, which may be the first state of the sensing procedure. The KPI requirement of the sensing service in the first state may be lower than the given KPI threshold of the sensing service, and the wireless sensing resources required to be allocated to the sensing service in the first state may be less than the given wireless sensing resource threshold of the sensing service.

In an embodiment, the second state may be a "warning confirmation" state, in which the KPI requirement of the sensing service may be greater than or equal to the given KPI threshold of the sensing service, and the wireless sensing resources required to be allocated to the sensing service in the second state may be greater than or equal to the given wireless sensing resource threshold of the sensing service.

In an embodiment, the third state may be a "target tracking" state, in which the KPI requirement of the sensing service may be greater than or equal to the given KPI threshold of the sensing service, and the wireless sensing resources required to be allocated to the sensing service in the third state may be greater than or equal to the given wireless sensing resource threshold of the sensing service.

In an embodiment, the fourth state may be an "idle" state, which is a temporary state in the sensing procedure, indicating that the sensing node does not need to perform the sensing procedure, or the KPI requirement of the sensing service in the fourth state is lower than the given KPI threshold of the sensing service, and the wireless sensing resources that need to be allocated to the sensing service in the fourth state may be less than the given wireless sensing resource threshold of the sensing service.

In an embodiment, the KPI requirement of the sensing service in the first state may be lower than the KPI requirement of the sensing service in the second state, and the wireless sensing resources required to be allocated to the sensing service in the first state are less than the wireless sensing resources required to be allocated to the sensing service in the second state.

In an embodiment, the KPI requirement of the sensing service in the first state may be lower than the KPI requirement of the sensing service in the third state, and the wireless sensing resource required to be allocated to the sensing service in the first state are less than the wireless sensing resource required to be allocated to the sensing service in the third state.

In an embodiment, the KPI requirement of the sensing service in the fourth state may be lower than the KPI requirement of the sensing service in the second state, and the wireless sensing resources required to be allocated to the sensing service in the fourth state are less than the wireless sensing resources required to be allocated to the sensing service in the second state.

In an embodiment, the KPI requirement of the sensing service in the fourth state may be lower than the KPI requirement of the sensing service in the third state, and the wireless sensing resources required to be allocated to the sensing service in the fourth state are less than the wireless sensing resources required to be allocated to the sensing service in the second state.

In an embodiment, in case that the sensing device in the first state initially senses the target, the sensing device may switch to the second state to obtain more accurate sensing results. Accordingly, the first state is called the "early warning screening" state, and the state characteristics are: lower sensing KPI requirements, fewer allocated wireless resources, and lower priority.

In an embodiment, in case that the sensing device in the second state accurately senses the target, the sensing device switch the third state or the fourth state based on the indication of the node that manages the state of the sensing procedure. Correspondingly, the second state is called the "early warning confirmation" state, and the state characteristics are: higher sensing KPI requirements, more allocated wireless resources, and higher priority.

In an embodiment, the sensing device in the third state may use historical sensing data or sensing results to require fewer wireless sensing resources. Accordingly, the third state is called the "target tracking" state; the state characteristics are: high sensing KPI requirements, fewer allocated wireless resources, and moderate priority.

In an embodiment, the sensing device in the third state may periodically report the target tracking results and continue the third state or switch to other states based on the indication of the node that manages the state of the sensing procedure.

In an embodiment, the sensing device in the fourth state may stop performing the sensing procedure, or perform a sensing procedure that requires very few wireless sensing resources, and continue the fourth state or switch to other states according to the indication of the node that manages the state of the sensing procedure. Accordingly, the fourth state is called the "idle state"; the state characteristics are: least allocated wireless resources (such as: no sensing resources), and lowest priority.

In an embodiment, the fourth state and other states may switch bidirectionally, for example, the fourth state may switch to the first state, or from the first state to the fourth state.

For example, two base stations share a sensing task. In the first state, both base stations perform sensing. However, due to the mobility of the sensed object, only one base station is required to complete the second state, and the other base station may be in the fourth state. Furthermore, after a certain period of time, if the sensed object moves to the base station in the fourth state, the base station directly enters the third state or the second state.

In an embodiment, the state of the sensing service is invisible to the base station or terminal. The sensing server and the base station and/or terminal adopt an interactive sensing method, that is, the base station and/or terminal performs one sensing, sends the sensing result to the sensing server, and the sensing server updates the sensing parameters and the base station and/or terminal performs another sensing. In this way, in fact, a sensing service is divided into multiple sub-procedures. In case that the state of the sensing procedure changes, such as from the first state to the second state, the sensing behavior of the sensing device does not start from the beginning, but uses some historical sensing results or data of the first state to quickly proceed to the second state. That is, the sensing device performs the next step of sensing based on the historical results of the first state, which may speed up the sensing procedure and improve sensing accuracy and reliability.

In an embodiment, in case that the sensing device and the node managing the state of the sensing procedure are not the same device, indication information is required to indicate the correlation between the two different states. The indication information may be the same service identifier (ID) or other indication information.

In an embodiment, the state management information of the sensing procedure includes one or more of following:
one or more states included in the sensing procedure;
an initial state of the sensing procedure;
a KPI of the sensing procedure;
a service type identifier of the sensing service;
an identifier of a node that manages the state of the sensing procedure;
an identifier of a node that allocates the wireless sensing resource for the sensing service.

In an embodiment, the state included in the sensing procedure may be the state of the sensing procedure included in the sensing service, such as one or more of the first state, the second state, the third state, or the fourth state.

In an embodiment, the initial state of the sensing procedure may be a state selected from the states included in the sensing procedure, which is the most suitable state to be used as the initial state of the sensing service, such as the first state.

For example, taking autonomous driving as an example of a sensing service, considering that it only makes sense for the base station to send a sensing signal in case that a vehicle passes through the sensing area and a vehicle requests sensing, it is more reasonable for the initial state of the sensing service to be in the fourth state before the vehicle requests.

In an embodiment, the KPI of the sensing service may be an indicator set based on the requirements of the sensing service.

For example, in case that the sensing service is autonomous driving, the sensing service KPI may be a sensing range of 1 km, a refresh rate of 0.1s, or a maximum sensing delay of 1500 ms.

For example, in case that the sensing service is security, the sensing service KPI may be a sensing range of 3km, a refresh rate of 0.01s, or a maximum sensing delay of 500 ms, etc.

In an embodiment, the service type identifier of the sensing service may be an identifier corresponding to the service type of the sensing service. The service type of the sensing service may be determined based on the identifier, and the sensing service KPI corresponding to the service type may be determined.

In an embodiment, the identifier of the node that manages the state of the sensing procedure may be the identifier corresponding to the node that manages the state of the sensing procedure. Based on the identifier, it may be determined that the node that manages the state of the sensing procedure is a terminal, a base station, or a sensing server.

In an embodiment, the identifier of the node that allocates wireless sensing resources for the sensing service may be the identifier corresponding to the node that allocates the wireless sensing resources for the sensing service. Based on the identifier, it may be determined that the node that allocates wireless sensing resources for the sensing service is a terminal, a base station, or a sensing server.

In an embodiment, in case that the sensing server is a node (sensing state management node) that manages the state of the sensing procedure, the sensing server may trigger the sensing service and determine one or more of following: the state included in the sensing procedure, the initial state of the sensing procedure, the KPI of the sensing service, the service type identifier of the sensing service, the identifier of the node that manages the state of the sensing procedure, or the identifier of the node that allocates the wireless sensing resource for the sensing service.

In an embodiment, the sensing server may send state management information to the base station or the terminal for determining the state of the sensing procedure and/or the sensing service KPI.

In an embodiment, the sensing server may receive one or more of the following sent from the base station or terminal: the state included in the sensing procedure, the initial state of the sensing procedure, the KPI of the sensing service, the service type identifier of the sensing service, the identifier of the node that manages the state of the sensing procedure, and the identifier of the node that allocates wireless sensing resources for the sensing service, and determine the state of the sensing procedure and/or the KPI of the sensing service.

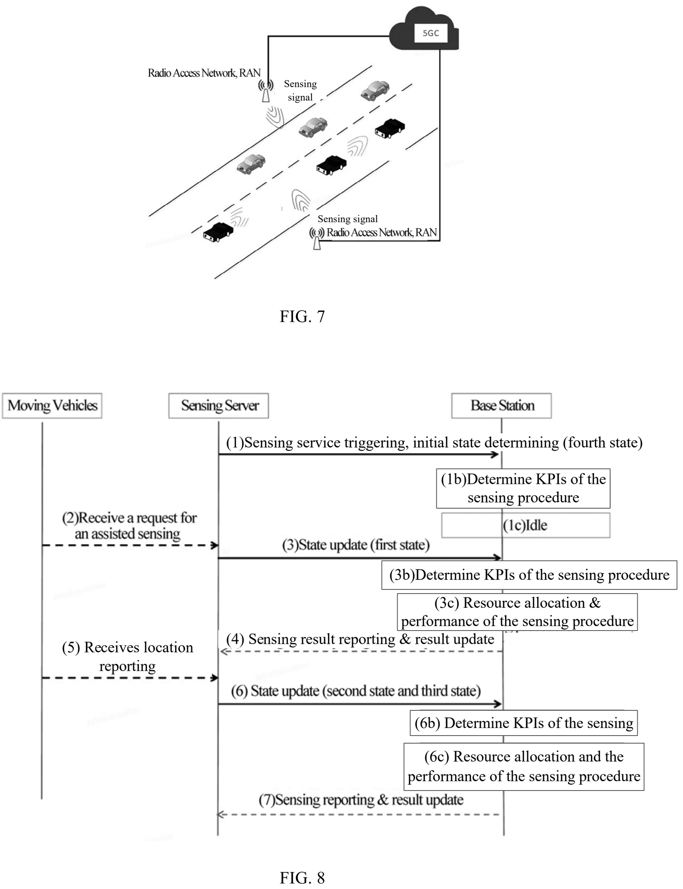

FIG. 7 is a schematic diagram of an application scenario of autonomous driving with assisted sensing provided by an embodiment of the present application. As shown in FIG. 7, in one embodiment of the present application, taking autonomous driving with assisted sensing as an example, the sensing method provided by an embodiment of the present application is described in detail. Autonomous driving with assisted sensing means that a roadside base station (a base station installed on the roadside for sensing) senses surrounding vehicles or obstacles based on the vehicle's request and informs the moving vehicle of the sensing information.

FIG. 8 is a schematic diagram of a state management and a sensing procedure of autonomous driving with assisted sensing provided by an embodiment of the present application. As shown in FIG. 8, in one embodiment of the present application, taking the terminal as a moving vehicle, the node that manages the state of the sensing procedure as a sensing server, and the node and sensing device that allocate wireless sensing resources for sensing services as a base station as an example, the autonomous driving state management and sensing procedure of assisted sensing includes the following steps.

Step (1), trigger the sensing service and determine the state information and sensing service information of the sensing service procedure by the sensing server. The relevant content includes the following items.
1. In the entire life cycle of the sensing service, all four defined states are included: the first state, the second state, the third state, and the fourth state.
2.The initial state of the sensing service is the fourth state.

In an embodiment, considering that it is meaningful for the base station to send a sensing signal only in case that a vehicle passes through the sensing area and a vehicle requests sensing, it is more reasonable for the sensing service to be in the fourth state before the vehicle requests.
3. The sensing procedure is managed by the sensing server.
4. The base station allocates wireless sensing resources for the sensing service.
5. The KPIs for determining the sensing service are shown in Table 1.

**Table 1: KPIs for Autonomous Driving with Assisted Sensing**

| Sensing service area | Cre dibi lity [%] | Sensed location accuracy (m) | | Sensing speed accuracy | | Sensing resolution | | Maxi mum sensin g delay [ms] | Refres h rate [s] | Misse d detec tion rate [%] | False detec tion rate [%] |
|---|---|---|---|---|---|---|---|---|---|---|---|
| | | Horiz ontal [m] | Vertic al [m] | Horizon tal [km/h] | Vert ical [m/s ] | Range[ m] | Velocity [m/s x m/s] | | | | |
| Outdoor | 95 | ≤1.5 | N/A | 5 km/h | N/A | N/A | N/A | <1500 | ≤ 0.1 | ≤0.1 | ≤0.1 |

In an embodiment, the KPIs in Table 1 may be understood as KPI values of the final service sensing results. If it is a sensing type service identifier, there is an implicit indication of the meaning of the sensed KPI value.

Step (1b), determine, by the base state, the KPI of the sensing service.

Step (1c), from the perspective of the base station, since the initial state is the fourth state, allocate no sensing resources and perform no sensing behavior by the base station.

In an embodiment, for the fourth state, the base station may also downgrade the KPI to perform simpler or coarse-grained sensing. For example, the KPI for the fourth state may be adjusted as shown in Table 2.

**Table 2: KPIs for Autonomous Driving with Assisted Sensing in the Fourth State**

| Sensing service area | Credib ility [%] | Sensed location accuracy (m) | | Sensing speed accuracy | | Sensing resolution | | Maximu m sensing delay [ms] | Refres h rate [s] | Missed detecti on rate [%] | False detecti on rate [%] |
|---|---|---|---|---|---|---|---|---|---|---|---|
| | | Horiz ontal [m] | Vertic al [m] | Horizont al [km/h] | Vertic al [m/s] | Range [m] | Velocity [m/s x m/s] | | | | |
| Outdoor ( service KPIs) | 95 | ≤1.5 | N/A | 5 km/h | N/A | N/A | N/A | <1500 | ≤ 0.1 | ≤0.1 | ≤0.1 |
| Outdoor (fourth state KPIs) | 70 | ≤2 | N/A | 15 km/h | N/A | N/A | N/A | <3500 | ≤ 3 | ≤0.1 | ≤0.3 |

In an embodiment, the base station may allocate wireless sensing resources according to the degraded KPI, and the sensing device performs coarse-grained sensing.

Step (2), receive, by the sensing server, the assisted sensing request.

After receiving the assisted sensing request, the sensing server determines one or more base stations that participate in the sensing service. Simultaneously, the update of state of the sensing procedure is determined according to the distance between the requesting vehicle and the base station participating in the sensing service. For example, in case that the distance is less than or equal to 1000 meters, the first state is reached; in case that the distance is less than or equal to 500 meters, the second state and the third state are reached.

Step (3), receive, by the base station, a state update indication.

The base station receives the state update information of the sensing procedure sent from the sensing server, such as updating to the first state. The state update information of the sensing procedure may be sent as a separate command or together with other messages; the state update information of the sensing procedure may be a periodic indication or a dynamic update indication.

Step (3b), determine the sensing service KPI.

The base station determines the sensing procedure KPI (such as the KPI of the first state) based on the updated state, the updated sensing service KPI or the updated service type identifier. Compared with the service sensing KPI, the base station may also downgrade and perform simpler or coarse-grained sensing. For example, the KPI of the first state may be adjusted as shown in Table 3.

**Table 3: KPIs for Autonomous Driving with Assisted Sensing in the First State**

| Sensing service area | Credib ility [%] | Sensed location accuracy (m) | | Sensing speed accuracy | | Sensing resolution | | Maximu m sensing delay [ms] | Refres h rate [s] | Missed detecti on rate [%] | False detecti on rate [%] |
|---|---|---|---|---|---|---|---|---|---|---|---|
| | | Horiz ontal [m] | Vertic al [m] | Horizont al [km/h] | Vertic al [m/s] | Range [m] | Velocity [m/s x m/s] | | | | |
| Outdoor ( service KPIs) | 95 | ≤1.5 | N/A | 5 km/h | N/A | N/A | N/A | <1500 | ≤ 0.1 | ≤0.1 | ≤0.1 |
| Outdoor (fourth state KPIs) | 70 | ≤2 | N/A | 15 km/h | N/A | N/A | N/A | <3500 | ≤ 3 | ≤0.1 | ≤0.3 |
| Outdoor (first state KPIs) | 80 | ≤2 | N/A | 10 km/h | N/A | N/A | N/A | <2000 | ≤1 | ≤0.1 | ≤0.2 |

In an embodiment, the base station may allocate wireless sensing resources according to the degraded KPI, and the sensing device performs coarse-grained sensing.

Step (3c), resource allocation & execution of sensing procedure.

The base station performs wireless sensing resource scheduling according to the sensing procedure KPI, such as the KPI in the first state, and performs the sensing procedure.

Step (4), reports, by the base station, the sensing results based on the requirements of the sensing service.

Step (5), receive, by the sensing server, vehicle location information.

The sensing server receives the periodically updated location information of the vehicle and determines one or more base stations participating in the sensing service. Simultaneously, the update of the state of the sensing procedure is determined according to the distance between the requesting vehicle and the base station participating in the sensing service. For example, in case that the distance is less than or equal to 1000 meters, the first state is reached; in case that the distance is less than or equal to 500 meters, the second state and the third state are reached.

Step (6), receive, by the base station, a state update indication.

The base station receives a state update indication sent from the sensing server, such as updating to the second state and the third state. The indication information may be sent as a separate command or together with other messages. The indication information may be a periodic indication or a dynamic update indication.

Step (6b), determine the sensing service KPIs.

In an embodiment, since the second state and the third state may fully adopt the service sensing KPIs, the values of the service sensing KPIs in Table 1 may be directly used.

Step (6c), resource allocation & execution of sensing procedure.

The base station schedules wireless sensing resources according to the sensing procedure KPI (second state and third state) and performs the sensing procedure.

Step (7), reports, by the base station, the sensing results based on the requirements of the sensing service.

The network control center of the embodiments of the present disclosure may be a base station, which may include multiple cells providing services for terminals. Depending on the specific application scenario, the base station may also be called an access point, or may be a device in an access network that communicates with wireless terminal devices through one or more sectors on the air interface, or may be called another name. The network device may be used to convert received air frames into Internet Protocol (IP) packets and vice versa, acting as a router between the wireless terminal device and the rest of the access network, where the rest of the access network may include an Internet Protocol (IP) communication network. The network device may also coordinate the management of attributes of the air interface. For example, the network device in the embodiments of the present application may be a network device (Base Transceiver Station, BTS) in the global system for mobile communications (GSM) or code division multiple access (CDMA), or a network device (NodeB) in wide-band code division multiple access (WCDMA), or an evolved network device (eNB or e-NodeB) in the long term evolution (LTE) system, or a 5G base station (gNB) in the 5G network architecture (next generation system), or a home evolved node B (HeNB), a relay node, a femto, a pico, etc., but is not limited in the embodiments of the present application. In some network structures, a network device may include a centralized unit (CU) node and a distributed unit (DU) node. The centralized unit and the distributed unit may also be geographically separated.

The network device and the terminal device each may use one or more antennas for multiple input multiple output (MIMO) transmission. MIMO transmission may be single-user MIMO (SU-MIMO) transmission or multi-user MIMO (MU-MIMO) transmission. Depending on the mode and number of antenna combinations, MIMO transmission may be a 2D-MIMO transmission, a 3D-MIMO transmission, an FD-MIMO, or a massive-MIMO, and may also be a diversity transmission, a precoding transmission, or a beamforming transmission.

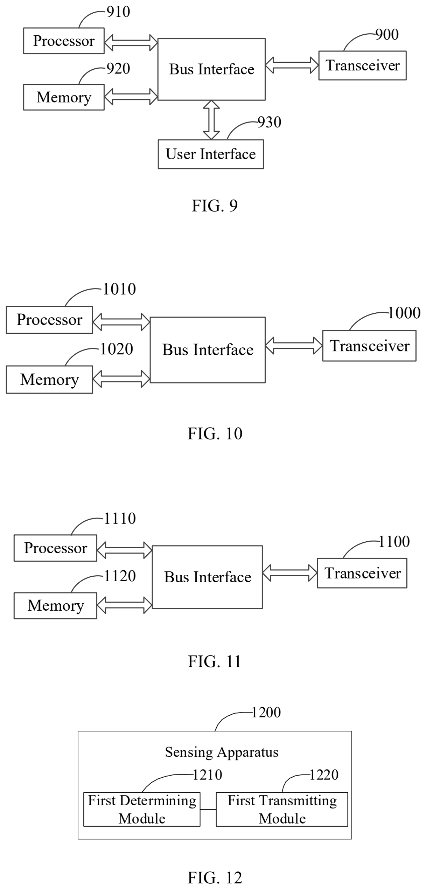

FIG. 9 is a schematic structural diagram of a terminal according to an embodiment of the present application. As shown in FIG. 9, the terminal includes a memory 920, a transceiver 900, and a processor 910.

The memory 920 is used for storing a computer program; the transceiver 900 is used for receiving and transmitting data under control of the processor 910; and the processor 910 is used for reading the computer program in the memory 920 and performing following operations:
determining a wireless sensing resource for a sensing service, where the wireless sensing resource is associated with a state of a sensing procedure and/or a sensing service key performance indicator (KPI); and
sending or receiving a sensing signal or channel based on the wireless sensing resource.

In an embodiment, the transceiver 900 is used for receiving and transmitting data under control of the processor 910.

In FIG. 9, a bus architecture may include any number of interconnected buses and bridges, linking together by various circuits of one or more processors represented by processor 910 and memory represented by memory 920. The bus architecture may also link together various other circuits such as peripheral devices, voltage regulators, and power management circuits, which are all well known in the art and, therefore, will not be described further herein. The bus interface provides the interface. The transceiver 900 may be a plurality of components, including a transmitter and a receiver, providing a unit for communicating with various other devices over a transmission medium, such as a wireless channel, a wired channel, an optical cable, or the like. For different user devices, the user interface 930 may also be an interface capable of connecting to external or internal devices as required, and the connected devices include but are not limited to a keypad, a display, a speaker, a microphone, a joystick, and the like.

The processor 910 is responsible for managing the bus architecture and general processing, and the memory 920 may store data used by the processor 910 when performing operations.

In an embodiment, the processor 910 may be a central processing unit (CPU), an application specific integrated circuit (ASIC), a field programmable gate array (FPGA), or a complex programmable logic device (CPLD). The processor may also adopt a multi-core architecture.

The processor invokes the computer program stored in the memory to execute any of the methods provided in the embodiments of the present application according to the obtained executable instructions. The processor and memory may also be physically separated.

In an embodiment, the processor 910 is further used for any of the following:
determining the wireless sensing resource based on the state of the sensing procedure and/or the sensing service KPI; or
receiving resource indication information sent from a base station or a sensing server, and determining the wireless sensing resource based on the resource indication information, where the resource indication information is generated based on the state of the sensing procedure and/or the sensing service KPI.

In an embodiment, the processor 910 is further used for:
determining the state of the sensing procedure and/or the sensing service KPI.

In an embodiment, the processor 910 is further used for:
determining the state of the sensing procedure and/or the sensing service KPI based on state management information; or
receiving state update information of the sensing procedure sent from a sensing server or a base station, and determining an updated state of the sensing procedure and/or an updated sensing service KPI based on the state update information of the sensing procedure; or
updating the state of the sensing procedure and/or the sensing service KPI based on a historical sensing result or data in the sensing procedure.

In an embodiment, the processor 910 is further used for:
triggering the sensing service and determining state management information; or
receiving state management information sent from a sensing server or a base station.

In an embodiment, the processor 910 is further used for:
sending the state management information to the sensing server or the base station.

In an embodiment, the processor 910 is further used for:
sending the state update information of the sensing procedure to the sensing server or the base station, where the state update information of the sensing procedure is used to indicate the updated state of the sensing procedure and/or the updated sensing service KPI.

In an embodiment, the state of the sensing procedure includes one or more of following:
a first state, a second state, a third state, or a fourth state;
the state of the sensing procedure meets one or more of following:
   a KPI of a sensing service in the first state is lower than a given KPI threshold of the sensing service;
   a KPI of a sensing service in the fourth state is lower than a given KPI threshold of the sensing service;
   a KPI of a sensing service in the first state is lower than a KPI of a sensing service in the second state;
   a KPI of a sensing service in the first state is lower than a KPI of a sensing service in the third state;
   a KPI of a sensing service in the fourth state is lower than a KPI of a sensing service in the second state;
   a KPI of a sensing service in the fourth state is lower than a KPI of a sensing service in the third state;
   a KPI of a sensing service in the second state is higher than or equal to a given KPI threshold of the sensing service; or
   a KPI of a sensing service in the third state is higher than or equal to a given KPI threshold of the sensing service.

In an embodiment, the state management information includes one or more of the following:
one or more states included in the sensing procedure;
an initial state of the sensing procedure;
a KPI of the sensing procedure;
a service type identifier of the sensing service;
an identifier of a node that manages the state of the sensing procedure;
an identifier of a node that allocates wireless sensing resources for the sensing service.

It should be noted here that the above-mentioned terminal provided in the embodiment of the present application may implement all the method steps implemented by the method embodiment in which the execution body is the terminal, and may achieve the same technical effect. The parts and beneficial effects of this embodiment that are the same as those of the method embodiment will not be described in detail here.

FIG. 10 is a schematic structural diagram of a base station according to an embodiment of the present application. As shown in FIG. 10, the initial RAN includes a memory 1020, a transceiver 1000, and a processor 1010.

The memory 1020 is used for storing a computer program; the transceiver 1000 is used for receiving and transmitting data under control of the processor 1010; and the processor 1010 is used for reading the computer program in the memory 1020 and performing following operations:
determining a wireless sensing resource for a sensing service, where the wireless sensing resource is associated with a state of a sensing procedure and/or a sensing service key performance indicator (KPI); and
sending or receiving a sensing signal or channel based on the wireless sensing resource.

In an example, the transceiver 1000 is used for receiving and transmitting data under control of the processor 1010.

In FIG. 10, a bus architecture may include any number of interconnected buses and bridges, linking together by various circuits of one or more processors represented by processor 1010 and memory represented by memory 1020. The bus architecture may also link together various other circuits such as peripheral devices, voltage regulators, and power management circuits, which are all well known in the art and, therefore, will not be described further herein. The bus interface provides the interface. The transceiver 1000 may be a plurality of components, including a transmitter and a receiver, providing a unit for communicating with various other devices over a transmission medium, such as a wireless channel, a wired channel, an optical cable, or the like.

The processor 1010 is responsible for managing the bus architecture and general processing, and the memory 1020 may store data used by the processor 1010 when performing operations.

In an embodiment, the processor 1010 may be a central processing unit (CPU), an application specific integrated circuit (ASIC), a field programmable gate array (FPGA), or a complex programmable logic device (CPLD). The processor may also adopt a multi-core architecture.

The processor invokes the computer program stored in the memory to execute any of the methods provided in the embodiments of the present application according to the obtained executable instructions. The processor and memory may also be physically separated.

In an embodiment, the processor 1010 is further used for any of the following:
determining the wireless sensing resource based on the state of the sensing procedure and/or the sensing service KPI; or
receiving resource indication information sent from a sensing server, and determining the wireless sensing resource for the sensing service based on the resource indication information, where the resource indication information is generated based on the state of the sensing procedure and/or the sensing service KPI.

In an embodiment, the processor 1010 is further used for:
sending the resource indication information to a terminal, where the resource indication information is used to indicate the wireless sensing resource.

In an embodiment, the processor 1010 is further used for:
determining the state of the sensing procedure and/or the sensing service KPI.

In an embodiment, the processor 1010 is further used for:
determining the state of the sensing procedure and/or the sensing service KPI based on state management information; or
receiving state update information of the sensing procedure sent from a sensing server or a terminal, and determining an updated state of the sensing procedure and/or an updated sensing service KPI based on the state update information of the sensing procedure, where the state update information of the sensing procedure is generated based on an obtained sensing result; or
updating the state of the sensing procedure and/or the sensing service KPI based on a historical sensing result or data in the sensing procedure.

In an embodiment, the processor 1010 is further used for:
triggering the sensing service and determining state management information; or
receiving state management information sent from a sensing server or a terminal.

In an embodiment, the processor 1010 is further used for:
sending the state management information to the sensing server or the terminal.

In an embodiment, the processor 1010 is further used for:
sending the state update information of the sensing procedure to the sensing server or the terminal, where the state update information of the sensing procedure is used to indicate the updated state of the sensing procedure and/or the updated sensing service KPI.

In an embodiment, the state of the sensing procedure includes one or more of following:
a first state, a second state, a third state, or a fourth state;
the state of the sensing procedure meets one or more of following:
   a KPI of a sensing service in the first state is lower than a given KPI threshold of the sensing service;
   a KPI of a sensing service in the fourth state is lower than a given KPI threshold of the sensing service;
   a KPI of a sensing service in the first state is lower than a KPI of a sensing service in the second state;
   a KPI of a sensing service in the first state is lower than a KPI of a sensing service in the third state;
   a KPI of a sensing service in the fourth state is lower than a KPI of a sensing service in the second state;
   a KPI of a sensing service in the fourth state is lower than a KPI of a sensing service in the third state;
   a KPI of a sensing service in the second state is higher than or equal to a given KPI threshold of the sensing service; or
   a KPI of a sensing service in the third state is higher than or equal to a given KPI threshold of the sensing service.

In an embodiment, the state management information of the sensing procedure includes one or more of following:
one or more states included in the sensing procedure;
an initial state of the sensing procedure;
a KPI of the sensing procedure;
a service type identifier of the sensing service;
an identifier of a node that manages the state of the sensing procedure;
an identifier of a node that allocates wireless sensing resources for the sensing service.

It should be noted here that the above-mentioned base station provided in the embodiment of the present application may implement all the method steps implemented by the method embodiment in which the execution body is the base station, and may achieve the same technical effect. The parts and beneficial effects of this embodiment that are the same as those of the method embodiment will not be described in detail here.

FIG. 11 is a schematic structural diagram of a sensing server according to an embodiment of the present application. As shown in FIG. 11, the sensing server includes a memory 1120, a transceiver 1100, and a processor 1110.

The memory 1120 is used for storing a computer program; the transceiver 1100 is used for receiving and transmitting data under control of the processor 1110; and the processor 1110 is used for reading the computer program in the memory 1120 and performing following operations:
sending state management information and/or resource indication information of a sensing procedure to a base station or a terminal, where the state management information is used to indicate a state of the sensing procedure and/or a sensing service key performance indicator (KPI), and the resource indication information is used to indicate a wireless sensing resource used for the sensing service, and the wireless sensing resource is associated with the state of the sensing procedure and/or the sensing service KPI.

In an example, the transceiver 1100 is used for receiving and transmitting data under control of the processor 1110.

In FIG. 11, a bus architecture may include any number of interconnected buses and bridges, linking together by various circuits of one or more processors represented by processor 1110 and memory represented by memory 1120. The bus architecture may also link together various other circuits such as peripheral devices, voltage regulators, and power management circuits, which are all well known in the art and, therefore, will not be described further herein. The bus interface provides the interface. The transceiver 1100 may be a plurality of components, including a transmitter and a receiver, providing a unit for communicating with various other devices over a transmission medium, such as a wireless channel, a wired channel, an optical cable, or the like. The processor 1110 is responsible for managing the bus architecture and general processing, and the memory 1120 may store data used by the processor 1110 when performing operations.

In an embodiment, the processor 1110 may be a central processing unit (CPU), an application specific integrated circuit (ASIC), a field programmable gate array (FPGA), or a complex programmable logic device (CPLD). The processor may also adopt a multi-core architecture.

The processor invokes the computer program stored in the memory to execute any of the methods provided in the embodiments of the present application according to the obtained executable instructions. The processor and memory may also be physically separated.

In an embodiment, the processor 1110 is further used for:
determining the state of the sensing procedure and/or the sensing service KPI.

In an embodiment, the processor 1110 is further used for:
determining the wireless sensing resource used for the sensing service based on the state of the sensing procedure and/or the sensing service KPI.

In an embodiment, the processor 1110 is further used for:
determining the state of the sensing procedure and/or the sensing service KPI based on state management information; or
receiving state update information of the sensing procedure sent from a terminal or a base station, and determining an updated state of the sensing procedure and/or an updated sensing service KPI based on the state update information of the sensing procedure, where the state update information of the sensing procedure is generated based on an obtained sensing result; or
updating the state of the sensing procedure and/or the sensing service KPI based on a historical sensing result or data in the sensing procedure.

In an embodiment, the processor 1110 is further used for:
triggering the sensing service and determining state management information; or
receiving state management information sent from a base station or a terminal.

In an embodiment, the processor 1110 is further used for:
sending the state update information of the sensing procedure to the base station or the terminal, where the state update information of the sensing procedure is used to indicate the updated state of the sensing procedure and/or the updated sensing service KPI.

In an embodiment, the processor 1110 is further used for:
receiving resource indication information sent from a base station, and determining the wireless sensing resource used for the sensing service based on the resource indication information, where the resource indication information is generated based on the state of the sensing procedure and/or the sensing service KPI.

In an embodiment, the state of the sensing procedure includes one or more of following:
a first state, a second state, a third state, or a fourth state;
the state of the sensing procedure meets one or more of following:
   a KPI of a sensing service in the first state is lower than a given KPI threshold of the sensing service;
   a KPI of a sensing service in the fourth state is lower than a given KPI threshold of the sensing service;
   a KPI of a sensing service in the first state is lower than a KPI of a sensing service in the second state;
   a KPI of a sensing service in the first state is lower than a KPI of a sensing service in the third state;
   a KPI of a sensing service in the fourth state is lower than a KPI of a sensing service in the second state;
   a KPI of a sensing service in the fourth state is lower than a KPI of a sensing service in the third state;
   a KPI of a sensing service in the second state is higher than or equal to a given KPI threshold of the sensing service; or
   a KPI of a sensing service in the third state is higher than or equal to a given KPI threshold of the sensing service.

In an embodiment, the state management information of the sensing procedure includes one or more of following:
one or more states included in the sensing procedure;
an initial state of the sensing procedure;
a KPI of the sensing procedure;
a service type identifier of the sensing service;
an identifier of a node that manages the state of the sensing procedure;
an identifier of a node that allocates wireless sensing resources for the sensing service.

It should be noted here that the above-mentioned sensing server provided in the embodiment of the present application may implement all the method steps implemented by the method embodiment in which the execution body is the sensing server, and may achieve the same technical effect. The parts and beneficial effects of this embodiment that are the same as those of the method embodiment will not be described in detail here.

FIG. 12 is a first schematic structural diagram of a sensing apparatus provided by an embodiment of the present application. As shown in FIG. 12, the sensing apparatus 1200 includes:
a first determining module 1210, used for determining a wireless sensing resource for a sensing service, where the wireless sensing resource is associated with a state of a sensing procedure and/or a sensing service key performance indicator (KPI); and
a first transmitting module 1220, used for sending or receiving a sensing signal or channel based on the wireless sensing resource.

In an embodiment, the first determining module 1210 is further used for:
determining the wireless sensing resource based on the state of the sensing procedure and/or the sensing service KPI; or
receiving resource indication information sent from a base station or a sensing server, and determining the wireless sensing resource based on the resource indication information, where the resource indication information is generated based on the state of the sensing procedure and/or the sensing service KPI.

In an embodiment, the sensing apparatus 1200 further includes:
a third determining module, used for determining the state of the sensing procedure and/or the sensing service KPI.

In an embodiment, the third determining module is further used for:
determining the state of the sensing procedure and/or the sensing service KPI based on state management information; or
receiving state update information of the sensing procedure sent from a sensing server or a base station, and determining an updated state of the sensing procedure and/or an updated sensing service KPI based on the state update information of the sensing procedure; or
updating the state of the sensing procedure and/or the sensing service KPI based on a historical sensing result or data in the sensing procedure.

In an embodiment, the sensing apparatus 1200 further includes:
a first triggering module, used for triggering the sensing service and determining state management information; or
a first receiving module, used for receiving state management information sent from a sensing server or a base station.

In an embodiment, the sensing apparatus 1200 further includes:
a first sending module, used for sending the state management information to the sensing server or the base station.

In an embodiment, the sensing apparatus 1200 further includes:
a second sending module, used for sending the state update information of the sensing procedure to the sensing server or the base station, where the state update information of the sensing procedure is used to indicate the updated state of the sensing procedure and/or the updated sensing service KPI.

In an embodiment, the state of the sensing procedure includes one or more of following:
a first state, a second state, a third state, or a fourth state;
the state of the sensing procedure meets one or more of following:
   a KPI of a sensing service in the first state is lower than a given KPI threshold of the sensing service;
   a KPI of a sensing service in the fourth state is lower than a given KPI threshold of the sensing service;
   a KPI of a sensing service in the first state is lower than a KPI of a sensing service in the second state;
   a KPI of a sensing service in the first state is lower than a KPI of a sensing service in the third state;
   a KPI of a sensing service in the fourth state is lower than a KPI of a sensing service in the second state;
   a KPI of a sensing service in the fourth state is lower than a KPI of a sensing service in the third state;
   a KPI of a sensing service in the second state is higher than or equal to a given KPI threshold of the sensing service; or
   a KPI of a sensing service in the third state is higher than or equal to a given KPI threshold of the sensing service.

In an embodiment, the state management information includes one or more of the following:
one or more states included in the sensing procedure;
an initial state of the sensing procedure;
a KPI of the sensing procedure;
a service type identifier of the sensing service;
an identifier of a node that manages the state of the sensing procedure;
an identifier of a node that allocates wireless sensing resources for the sensing service.

It should be noted here that the above-mentioned terminal provided in the embodiment of the present application may implement all the method steps implemented by the method embodiment in which the execution body is the terminal, and may achieve the same technical effect. The parts and beneficial effects of this embodiment that are the same as those of the method embodiment will not be described in detail here.

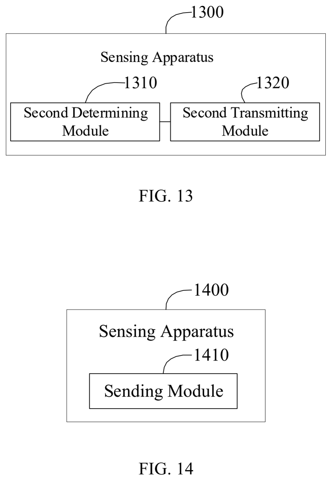

FIG. 13 is a second schematic structural diagram of a sensing apparatus provided by an embodiment of the present application. As shown in FIG. 13, the sensing apparatus 1300 includes:
a second determining module 1310, used for determining a wireless sensing resource for a sensing service, where the wireless sensing resource is associated with a state of a sensing procedure and/or a sensing service key performance indicator (KPI); and
a second transmitting module 1320, used for sending or receiving a sensing signal or channel based on the wireless sensing resource.

In an embodiment, the second determining module 1310 is further used for:
determining the wireless sensing resource based on the state of the sensing procedure and/or the sensing service KPI; or
receiving resource indication information sent from a base station or a sensing server, and determining the wireless sensing resource based on the resource indication information, where the resource indication information is generated based on the state of the sensing procedure and/or the sensing service KPI.

In an embodiment, the sensing apparatus 1300 further includes:
a third sending module, used for sending the resource indication information to a terminal, where the resource indication information is used to indicate the wireless sensing resource.

In an embodiment, the sensing apparatus 1300 further includes:
a fourth determining module, used for determining the state of the sensing procedure and/or the sensing service KPI.

In an embodiment, the fourth determining module is further used for:
determining the state of the sensing procedure and/or the sensing service KPI based on state management information; or
receiving state update information of the sensing procedure sent from a sensing server or a terminal, and determining an updated state of the sensing procedure and/or an updated sensing service KPI based on the state update information of the sensing procedure, where the state update information of the sensing procedure is generated based on an obtained sensing result; or
updating the state of the sensing procedure and/or the sensing service KPI based on a historical sensing result or data in the sensing procedure.

In an embodiment, the sensing apparatus 1300 further includes:
a second triggering module, used for triggering the sensing service and determining state management information; or
a second receiving module, used for receiving state management information sent from a sensing server or a terminal.

In an embodiment, the sensing apparatus 1300 further includes:
a fourth sending module, used for sending the state management information to the sensing server or the terminal.

In an embodiment, the sensing apparatus 1300 further includes:
a fifth sending module, used for sending the state update information of the sensing procedure to the sensing server or the terminal, where the state update information of the sensing procedure is used to indicate the updated state of the sensing procedure and/or the updated sensing service KPI.

In an embodiment, the state of the sensing procedure includes one or more of following:
a first state, a second state, a third state, or a fourth state;
the state of the sensing procedure meets one or more of following:
   a KPI of a sensing service in the first state is lower than a given KPI threshold of the sensing service;
   a KPI of a sensing service in the fourth state is lower than a given KPI threshold of the sensing service;
   a KPI of a sensing service in the first state is lower than a KPI of a sensing service in the second state;
   a KPI of a sensing service in the first state is lower than a KPI of a sensing service in the third state;
   a KPI of a sensing service in the fourth state is lower than a KPI of a sensing service in the second state;
   a KPI of a sensing service in the fourth state is lower than a KPI of a sensing service in the third state;
   a KPI of a sensing service in the second state is higher than or equal to a given KPI threshold of the sensing service; or
   a KPI of a sensing service in the third state is higher than or equal to a given KPI threshold of the sensing service.

In an embodiment, the state management information includes one or more of the following:
one or more states included in the sensing procedure;
an initial state of the sensing procedure;
a KPI of the sensing procedure;
a service type identifier of the sensing service;
an identifier of a node that manages the state of the sensing procedure;
an identifier of a node that allocates wireless sensing resources for the sensing service.

It should be noted here that the above-mentioned terminal provided in the embodiment of the present application may implement all the method steps implemented by the method embodiment in which the execution body is the terminal, and may achieve the same technical effect. The parts and beneficial effects of this embodiment that are the same as those of the method embodiment will not be described in detail here.

FIG. 14 is a third schematic structural diagram of a sensing apparatus provided by an embodiment of the present application. As shown in FIG. 14, the sensing apparatus 1400 includes:
a sending module 1410, used for sending state management information and/or resource indication information of a sensing procedure to a base station or a terminal, where the state management information is used to indicate a state of the sensing procedure and/or a sensing service key performance indicator (KPI), and the resource indication information is used to indicate a wireless sensing resource used for the sensing service, and the wireless sensing resource is associated with the state of the sensing procedure and/or the sensing service KPI.

In an embodiment, the sensing apparatus 1400 further includes:
a fifth determining module, used for determining the state of the sensing procedure and/or the sensing service KPI.

In an embodiment, the sensing apparatus 1400 further includes:
a sixth determining module, used for determining the wireless sensing resource used for the sensing service based on the state of the sensing procedure and/or the sensing service KPI.

In an embodiment, the fifth determining module is further used for:
determining the state of the sensing procedure and/or the sensing service KPI based on state management information; or
receiving state update information of the sensing procedure sent from a terminal or a base station, and determining an updated state of the sensing procedure and/or an updated sensing service KPI based on the state update information of the sensing procedure, where the state update information of the sensing procedure is generated based on an obtained sensing result; or
updating the state of the sensing procedure and/or the sensing service KPI based on a historical sensing result or data in the sensing procedure.

In an embodiment, the sensing apparatus 1400 further includes:
a third triggering module, used for triggering the sensing service and determining state management information; or
a third receiving module, used for receiving state management information sent from a base station or a terminal.

In an embodiment, the sensing apparatus 1400 further includes:
a sixth sending module, used for sending the state update information of the sensing procedure to the base station or the terminal, where the state update information of the sensing procedure is used to indicate the updated state of the sensing procedure and/or the updated sensing service KPI.

In an embodiment, the sensing apparatus 1400 further includes:
the fourth receiving module, used for receiving resource indication information sent from a base station, and determining the wireless sensing resource used for the sensing service based on the resource indication information, where the resource indication information is generated based on the state of the sensing procedure and/or the sensing service KPI.

In an embodiment, the state of the sensing procedure includes one or more of following:
a first state, a second state, a third state, or a fourth state;
the state of the sensing procedure meets one or more of following:
   a KPI of a sensing service in the first state is lower than a given KPI threshold of the sensing service;
   a KPI of a sensing service in the fourth state is lower than a given KPI threshold of the sensing service;
   a KPI of a sensing service in the first state is lower than a KPI of a sensing service in the second state;
   a KPI of a sensing service in the first state is lower than a KPI of a sensing service in the third state;
   a KPI of a sensing service in the fourth state is lower than a KPI of a sensing service in the second state;
   a KPI of a sensing service in the fourth state is lower than a KPI of a sensing service in the third state;
   a KPI of a sensing service in the second state is higher than or equal to a given KPI threshold of the sensing service; or
   a KPI of a sensing service in the third state is higher than or equal to a given KPI threshold of the sensing service.

In an embodiment, the state management information of the sensing procedure includes one or more of following:
one or more states included in the sensing procedure;
an initial state of the sensing procedure;
a KPI of the sensing procedure;
a service type identifier of the sensing service;
an identifier of a node that manages the state of the sensing procedure;
an identifier of a node that allocates wireless sensing resources for the sensing service.

It should be noted here that the above-mentioned terminal provided in the embodiment of the present application may implement all the method steps implemented by the method embodiment in which the execution body is the terminal, and may achieve the same technical effect. The parts and beneficial effects of this embodiment that are the same as those of the method embodiment will not be described in detail here.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as USB flash disk, mobile hard disk, read-only memory (ROM), random access memory (RAM), magnetic disk, or optical disk.

According to an embodiment of the present application, a computer-readable storage medium is provided, where the computer-readable storage medium stores computer programs that cause a processor to perform the method provided in the above-mentioned embodiments.

In an embodiment, the computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As well appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory that may direct a computer or other programmable data processing device to operate in a specific manner. The instructions stored in the processor-readable memory produce a product including an instruction device that implements the functions specified in one or more processes in the flowchart and/or one or more blocks of the block diagram.

These processor-executable instructions may be loaded onto a computer or other programmable data processing device to cause a series of operational steps to be performed on the computer or other programmable device to produce a computer-implemented process and instructions performed on the computer or other programmable devices provide steps for performing the functions specified in one or more flows in the flowchart and/or one or more blocks of the block diagram.

It should be noted that those skilled in the art may make various modifications and variations to the present application without departing from the scope of the present application. If these modifications and variations on the present application are within the scope of the claims of the present application and their equivalent solutions, the present application is also intended to cover such modifications and variations.

## Claims

1. A sensing method, performed by a terminal, comprising:
determining a wireless sensing resource for a sensing service, wherein the wireless sensing resource is associated with a state of a sensing procedure and/or a sensing service key performance indicator (KPI); and
sending or receiving a sensing signal or channel based on the wireless sensing resource.

2. The sensing method of claim 1, wherein determining the wireless sensing resource for the sensing service comprises any of following:
determining the wireless sensing resource based on the state of the sensing procedure and/or the sensing service KPI; or
receiving resource indication information sent from a base station or a sensing server, and determining the wireless sensing resource based on the resource indication information, wherein the resource indication information is generated based on the state of the sensing procedure and/or the sensing service KPI.

3. The sensing method of claim 1 or 2, further comprising:
determining the state of the sensing procedure and/or the sensing service KPI.

4. The sensing method of claim 3, wherein determining the state of the sensing procedure and/or the sensing service KPI comprises:
determining the state of the sensing procedure and/or the sensing service KPI based on state management information; or
receiving state update information of the sensing procedure sent from a sensing server or a base station, and determining an updated state of the sensing procedure and/or an updated sensing service KPI based on the state update information of the sensing procedure; or
updating the state of the sensing procedure and/or the sensing service KPI based on a historical sensing result or data in the sensing procedure.

5. The sensing method of claim 1 or 4, further comprising:
triggering the sensing service and determining state management information; or
receiving state management information sent from a sensing server or a base station.

6. The sensing method of claim 5, further comprising:
sending the state management information to the sensing server or the base station.

7. The sensing method of claim 4, further comprising:
sending the state update information of the sensing procedure to the sensing server or the base station, wherein the state update information of the sensing procedure is used to indicate the updated state of the sensing procedure and/or the updated sensing service KPI.

8. The sensing method of claim 1, wherein the state of the sensing procedure comprises one or more of following:
a first state, a second state, a third state, or a fourth state;
the state of the sensing procedure meets one or more of following:
a KPI of a sensing service in the first state is lower than a given KPI threshold of the sensing service;
a KPI of a sensing service in the fourth state is lower than a given KPI threshold of the sensing service;
a KPI of a sensing service in the first state is lower than a KPI of a sensing service in the second state;
a KPI of a sensing service in the first state is lower than a KPI of a sensing service in the third state;
a KPI of a sensing service in the fourth state is lower than a KPI of a sensing service in the second state;
a KPI of a sensing service in the fourth state is lower than a KPI of a sensing service in the third state;
a KPI of a sensing service in the second state is higher than or equal to a given KPI threshold of the sensing service; or
a KPI of a sensing service in the third state is higher than or equal to a given KPI threshold of the sensing service.

9. The sensing method of claim 4, wherein the state management information comprises one or more of the following:
one or more states comprised in the sensing procedure;
an initial state of the sensing procedure;
a KPI of the sensing procedure;
a service type identifier of the sensing service;
an identifier of a node that manages the state of the sensing procedure; or
an identifier of a node that allocates the wireless sensing resource for the sensing service.

10. A sensing method, performed by a base station, comprising:
determining a wireless sensing resource for a sensing service, wherein the wireless sensing resource is associated with a state of a sensing procedure and/or a sensing service key performance indicator (KPI); and
sending or receiving a sensing signal or channel based on the wireless sensing resource.

11. The sensing method of claim 10, wherein determining the wireless sensing resource for the sensing service comprises any of following:
determining the wireless sensing resource based on the state of the sensing procedure and/or the sensing service KPI; or
receiving resource indication information sent from a sensing server, and determining the wireless sensing resource for the sensing service based on the resource indication information, wherein the resource indication information is generated based on the state of the sensing procedure and/or the sensing service KPI.

12. The sensing method of claim 11, further comprising:
sending the resource indication information to a terminal, wherein the resource indication information is used to indicate the wireless sensing resource.

13. The sensing method of any of claims 10 to 12, further comprising:
determining the state of the sensing procedure and/or the sensing service KPI.

14. The sensing method of claim 13, wherein determining the state of the sensing procedure and/or the sensing service KPI comprises:
determining the state of the sensing procedure and/or the sensing service KPI based on state management information; or
receiving state update information of the sensing procedure sent from a sensing server or a terminal, and determining an updated state of the sensing procedure and/or an updated sensing service KPI based on the state update information of the sensing procedure, wherein the state update information of the sensing procedure is generated based on an obtained sensing result; or
updating the state of the sensing procedure and/or the sensing service KPI based on a historical sensing result or data in the sensing procedure.

15. The sensing method of claim 10 or 14, further comprising:
triggering the sensing service and determining state management information; or
receiving state management information sent from a sensing server or a terminal.

16. The sensing method of claim 15, further comprising:
sending the state management information to the sensing server or the terminal.

17. The sensing method of claim 14, further comprising:
sending the state update information of the sensing procedure to the sensing server or the terminal, wherein the state update information of the sensing procedure is used to indicate the updated state of the sensing procedure and/or the updated sensing service KPI.

18. The sensing method of claim 10, wherein the state of the sensing procedure comprises one or more of following:
a first state, a second state, a third state, or a fourth state;
the state of the sensing procedure meets one or more of following:
a KPI of a sensing service in the first state is lower than a given KPI threshold of the sensing service;
a KPI of a sensing service in the fourth state is lower than a given KPI threshold of the sensing service;
a KPI of a sensing service in the first state is lower than a KPI of a sensing service in the second state;
a KPI of a sensing service in the first state is lower than a KPI of a sensing service in the third state;
a KPI of a sensing service in the fourth state is lower than a KPI of a sensing service in the second state;
a KPI of a sensing service in the fourth state is lower than a KPI of a sensing service in the third state;
a KPI of a sensing service in the second state is higher than or equal to a given KPI threshold of the sensing service; or
a KPI of a sensing service in the third state is higher than or equal to a given KPI threshold of the sensing service.

19. The sensing method of claim 14, wherein the state of the sensing procedure comprises one or more of following:
one or more states comprised in the sensing procedure;
an initial state of the sensing procedure;
a KPI of the sensing procedure;
a service type identifier of the sensing service;
an identifier of a node that manages the state of the sensing procedure; or
an identifier of a node that allocates the wireless sensing resource for the sensing service.

20. A sensing method, performed by a sensing server, comprising:
sending state management information and/or resource indication information of a sensing procedure to a base station or a terminal, wherein the state management information is used to indicate a state of the sensing procedure and/or a sensing service key performance indicator (KPI), and the resource indication information is used to indicate a wireless sensing resource used for the sensing service, and the wireless sensing resource is associated with the state of the sensing procedure and/or the sensing service KPI.

21. The sensing method of claim 20, further comprising:
determining the state of the sensing procedure and/or the sensing service KPI.

22. The sensing method of claim 20 or 21, further comprising:
determining the wireless sensing resource used for the sensing service based on the state of the sensing procedure and/or the sensing service KPI.

23. The sensing method of claim 21, wherein determining the state of the sensing procedure and/or the sensing service KPI comprises:
determining the state of the sensing procedure and/or the sensing service KPI based on state management information; or
receiving state update information of the sensing procedure sent from a terminal or a base station, and determining an updated state of the sensing procedure and/or an updated sensing service KPI based on the state update information of the sensing procedure, wherein the state update information of the sensing procedure is generated based on an obtained sensing result; or
updating the state of the sensing procedure and/or the sensing service KPI based on a historical sensing result or data in the sensing procedure.

24. The sensing method of claim 20 or 23, further comprising:
triggering the sensing service and determining state management information; or
receiving state management information sent from a base station or a terminal.

25. The sensing method of claim 23, further comprising:
sending the state update information of the sensing procedure to the base station or the terminal, wherein the state update information of the sensing procedure is used to indicate the updated state of the sensing procedure and/or the updated sensing service KPI.

26. The sensing method of claim 20, further comprising:
receiving resource indication information sent from a base station, and determining the wireless sensing resource used for the sensing service based on the resource indication information, wherein the resource indication information is generated based on the state of the sensing procedure and/or the sensing service KPI.

27. The sensing method of claim 20, wherein the state of the sensing procedure comprises one or more of following:
a first state, a second state, a third state, or a fourth state;
the state of the sensing procedure meets one or more of following:
a KPI of a sensing service in the first state is lower than a given KPI threshold of the sensing service;
a KPI of a sensing service in the fourth state is lower than a given KPI threshold of the sensing service;
a KPI of a sensing service in the first state is lower than a KPI of a sensing service in the second state;
a KPI of a sensing service in the first state is lower than a KPI of a sensing service in the third state;
a KPI of a sensing service in the fourth state is lower than a KPI of a sensing service in the second state;
a KPI of a sensing service in the fourth state is lower than a KPI of a sensing service in the third state;
a KPI of a sensing service in the second state is higher than or equal to a given KPI threshold of the sensing service; or
a KPI of a sensing service in the third state is higher than or equal to a given KPI threshold of the sensing service.

28. The sensing method of claim 23, wherein the state of the sensing procedure comprises one or more of following:
one or more states comprised in the sensing procedure;
an initial state of the sensing procedure;
a KPI of the sensing procedure;
a service type identifier of the sensing service;
an identifier of a node that manages the state of the sensing procedure; or
an identifier of a node that allocates the wireless sensing resource for the sensing service.

29. A terminal, comprising: a memory, a transceiver, and a processor:
wherein the memory is used for storing a computer program; the transceiver is used for receiving and transmitting data under control of the processor; and the processor is used for reading the computer program in the memory and performing following operations:
determining a wireless sensing resource for a sensing service, wherein the wireless sensing resource is associated with a state of a sensing procedure and/or a sensing service key performance indicator (KPI); and
sending or receiving a sensing signal or channel based on the wireless sensing resource.

30. The terminal of claim 29, wherein determining the wireless sensing resource for the sensing service comprises any of following:
determining the wireless sensing resource based on the state of the sensing procedure and/or the sensing service KPI; or
receiving resource indication information sent from a base station or a sensing server, and determining the wireless sensing resource based on the resource indication information, wherein the resource indication information is generated based on the state of the sensing procedure and/or the sensing service KPI.

31. The terminal of claim 29 or 30, wherein in case that the processor reads the computer program in the memory, the processor further performs:
determining the state of the sensing procedure and/or the sensing service KPI.

32. The terminal of claim 31, wherein determining the state of the sensing procedure and/or the sensing service KPI comprises:
determining the state of the sensing procedure and/or the sensing service KPI based on state management information; or
receiving state update information of the sensing procedure sent from a sensing server or a base station, and determining an updated state of the sensing procedure and/or an updated sensing service KPI based on the state update information of the sensing procedure; or
updating the state of the sensing procedure and/or the sensing service KPI based on a historical sensing result or data in the sensing procedure.

33. The terminal of claim 29 or 32, wherein in case that the processor reads the computer program in the memory, the processor further performs:
triggering the sensing service and determining state management information; or
receiving state management information sent from a sensing server or a base station.

34. The terminal of claim 33, wherein in case that the processor reads the computer program in the memory, the processor further performs:
sending the state management information to the sensing server or the base station.

35. The terminal of claim 32, wherein in case that the processor reads the computer program in the memory, the processor further performs:
sending the state update information of the sensing procedure to the sensing server or the base station, wherein the state update information of the sensing procedure is used to indicate the updated state of the sensing procedure and/or the updated sensing service KPI.

36. The terminal of claim 29, wherein the state of the sensing procedure comprises one or more of following:
a first state, a second state, a third state, or a fourth state;
the state of the sensing procedure meets one or more of following:
a KPI of a sensing service in the first state is lower than a given KPI threshold of the sensing service;
a KPI of a sensing service in the fourth state is lower than a given KPI threshold of the sensing service;
a KPI of a sensing service in the first state is lower than a KPI of a sensing service in the second state;
a KPI of a sensing service in the first state is lower than a KPI of a sensing service in the third state;
a KPI of a sensing service in the fourth state is lower than a KPI of a sensing service in the second state;
a KPI of a sensing service in the fourth state is lower than a KPI of a sensing service in the third state;
a KPI of a sensing service in the second state is higher than or equal to a given KPI threshold of the sensing service; or
a KPI of a sensing service in the third state is higher than or equal to a given KPI threshold of the sensing service.

37. The terminal of claim 32, wherein the state management information comprises one or more of the following:
one or more states comprised in the sensing procedure;
an initial state of the sensing procedure;
a KPI of the sensing procedure;
a service type identifier of the sensing service;
an identifier of a node that manages the state of the sensing procedure; or
an identifier of a node that allocates the wireless sensing resource for the sensing service.

38. A base station, comprising: a memory, a transceiver, and a processor:
wherein the memory is used for storing a computer program; the transceiver is used for receiving and transmitting data under control of the processor; and the processor is used for reading the computer program in the memory and performing following operations:
determining a wireless sensing resource for a sensing service, wherein the wireless sensing resource is associated with a state of a sensing procedure and/or a sensing service key performance indicator (KPI); and
sending or receiving a sensing signal or channel based on the wireless sensing resource.

39. The base station of claim 38, wherein determining the wireless sensing resource for the sensing service comprises any of following:
determining the wireless sensing resource based on the state of the sensing procedure and/or the sensing service KPI; or
receiving resource indication information sent from a sensing server, and determining the wireless sensing resource for the sensing service based on the resource indication information, wherein the resource indication information is generated based on the state of the sensing procedure and/or the sensing service KPI.

40. The base station of claim 39, wherein in case that the processor reads the computer program in the memory, the processor further performs:
sending the resource indication information to a terminal, wherein the resource indication information is used to indicate the wireless sensing resource.

41. The base station of any of claims 38 to 40, wherein in case that the processor reads the computer program in the memory, the processor further performs:
determining the state of the sensing procedure and/or the sensing service KPI.

42. The base station of claim 41, wherein determining the state of the sensing procedure and/or the sensing service KPI comprises:
determining the state of the sensing procedure and/or the sensing service KPI based on state management information; or
receiving state update information of the sensing procedure sent from a sensing server or a terminal, and determining an updated state of the sensing procedure and/or an updated sensing service KPI based on the state update information of the sensing procedure, wherein the state update information of the sensing procedure is generated based on an obtained sensing result; or
updating the state of the sensing procedure and/or the sensing service KPI based on a historical sensing result or data in the sensing procedure.

43. The base station of claim 38 or 42, wherein in case that the processor reads the computer program in the memory, the processor further performs:
triggering the sensing service and determining state management information; or
receiving state management information sent from a sensing server or a terminal.

44. The base station of claim 43, wherein in case that the processor reads the computer program in the memory, the processor further performs:
sending the state management information to the sensing server or the terminal.

45. The base station of claim 42, wherein in case that the processor reads the computer program in the memory, the processor further performs:
sending the state update information of the sensing procedure to the sensing server or the terminal, wherein the state update information of the sensing procedure is used to indicate the updated state of the sensing procedure and/or the updated sensing service KPI.

46. The base station of claim 38, wherein the state of the sensing procedure comprises one or more of following:
a first state, a second state, a third state, or a fourth state;
the state of the sensing procedure meets one or more of following:
a KPI of a sensing service in the first state is lower than a given KPI threshold of the sensing service;
a KPI of a sensing service in the fourth state is lower than a given KPI threshold of the sensing service;
a KPI of a sensing service in the first state is lower than a KPI of a sensing service in the second state;
a KPI of a sensing service in the first state is lower than a KPI of a sensing service in the third state;
a KPI of a sensing service in the fourth state is lower than a KPI of a sensing service in the second state;
a KPI of a sensing service in the fourth state is lower than a KPI of a sensing service in the third state;
a KPI of a sensing service in the second state is higher than or equal to a given KPI threshold of the sensing service; or
a KPI of a sensing service in the third state is higher than or equal to a given KPI threshold of the sensing service.

47. The base station of claim 42, wherein the state of the sensing procedure comprises one or more of following:
one or more states comprised in the sensing procedure;
an initial state of the sensing procedure;
a KPI of the sensing procedure;
a service type identifier of the sensing service;
an identifier of a node that manages the state of the sensing procedure; or
an identifier of a node that allocates the wireless sensing resource for the sensing service.

48. A sensing server, comprising: a memory, a transceiver, and a processor:
wherein the memory is used for storing a computer program; the transceiver is used for receiving and transmitting data under control of the processor; and the processor is used for reading the computer program in the memory and performing following operations:
sending state management information and/or resource indication information of a sensing procedure to a base station or a terminal, wherein the state management information is used to indicate a state of the sensing procedure and/or a sensing service key performance indicator (KPI), and the resource indication information is used to indicate a wireless sensing resource used for the sensing service, and the wireless sensing resource is associated with the state of the sensing procedure and/or the sensing service KPI.

49. The sensing server of claim 48, wherein in case that the processor reads the computer program in the memory, the processor further performs:
determining the state of the sensing procedure and/or the sensing service KPI.

50. The sensing server of claim 48 or 49, wherein in case that the processor reads the computer program in the memory, the processor further performs:
determining the wireless sensing resource used for the sensing service based on the state of the sensing procedure and/or the sensing service KPI.

51. The sensing server of claim 49, wherein determining the state of the sensing procedure and/or the sensing service KPI comprises:
determining the state of the sensing procedure and/or the sensing service KPI based on state management information; or
receiving state update information of the sensing procedure sent from a terminal or a base station, and determining an updated state of the sensing procedure and/or an updated sensing service KPI based on the state update information of the sensing procedure, wherein the state update information of the sensing procedure is generated based on an obtained sensing result; or
updating the state of the sensing procedure and/or the sensing service KPI based on a historical sensing result or data in the sensing procedure.

52. The sensing server of claim 48 or 51, wherein in case that the processor reads the computer program in the memory, the processor further performs:
triggering the sensing service and determining state management information; or
receiving state management information sent from a base station or a terminal.

53. The sensing server of claim 51, wherein in case that the processor reads the computer program in the memory, the processor further performs:
sending the state update information of the sensing procedure to the base station or the terminal, wherein the state update information of the sensing procedure is used to indicate the updated state of the sensing procedure and/or the updated sensing service KPI.

54. The sensing server of claim 48, wherein in case that the processor reads the computer program in the memory, the processor further performs:
receiving resource indication information sent from a base station, and determining the wireless sensing resource used for the sensing service based on the resource indication information, wherein the resource indication information is generated based on the state of the sensing procedure and/or the sensing service KPI.

55. The sensing server of claim 48, wherein the state of the sensing procedure comprises one or more of following:
a first state, a second state, a third state, or a fourth state;
the state of the sensing procedure meets one or more of following:
a KPI of a sensing service in the first state is lower than a given KPI threshold of the sensing service;
a KPI of a sensing service in the fourth state is lower than a given KPI threshold of the sensing service;
a KPI of a sensing service in the first state is lower than a KPI of a sensing service in the second state;
a KPI of a sensing service in the first state is lower than a KPI of a sensing service in the third state;
a KPI of a sensing service in the fourth state is lower than a KPI of a sensing service in the second state;
a KPI of a sensing service in the fourth state is lower than a KPI of a sensing service in the third state;
a KPI of a sensing service in the second state is higher than or equal to a given KPI threshold of the sensing service; or
a KPI of a sensing service in the third state is higher than or equal to a given KPI threshold of the sensing service.

56. The sensing server of claim 51, wherein the state of the sensing procedure comprises one or more of following:
one or more states comprised in the sensing procedure;
an initial state of the sensing procedure;
a KPI of the sensing procedure;
a service type identifier of the sensing service;
an identifier of a node that manages the state of the sensing procedure; or
an identifier of a node that allocates the wireless sensing resource for the sensing service.

57. A sensing apparatus, for use in a terminal, comprising:
a first determining module, used for determining a wireless sensing resource for a sensing service, wherein the wireless sensing resource is associated with a state of a sensing procedure and/or a sensing service key performance indicator (KPI); and
a first transmitting module, used for sending or receiving a sensing signal or channel based on the wireless sensing resource.

58. A sensing apparatus, for use in a base station, comprising:
a second determining module, used for determining a wireless sensing resource for a sensing service, wherein the wireless sensing resource is associated with a state of a sensing procedure and/or a sensing service key performance indicator (KPI); and
a second transmitting module, used for sending or receiving a sensing signal or channel based on the wireless sensing resource.

59. A sensing apparatus, for use in a sensing server, comprising:
a sending module, used for sending state management information and/or resource indication information of a sensing procedure to a base station or a terminal, wherein the state management information is used to indicate a state of the sensing procedure and/or a sensing service key performance indicator (KPI), and the resource indication information is used to indicate a wireless sensing resource used for the sensing service, and the wireless sensing resource is associated with the state of the sensing procedure and/or the sensing service KPI.
